# EUROPEAN PATENT SPECIFICATION

(11) **EP 3 882 093 B1**
(45) Date of publication and mention of the grant of the patent: **12.04.2023**
(21) Application number: 19887669.0
(22) Date of filing: 17.10.2019
(51) Int. Cl.: B60W 10/04, B60W 10/06, B60W 10/11, B60W 10/111, B60W 30/188, B60W 30/20, F02D 29/00, F02D 41/02, F02D 43/00, F16H 61/02, F16D 11/00, B60W 30/19, B60W 50/00

(54) **VEHICLE**
FAHRZEUG
VÉHICULE

(30) Priority: 22.11.2018 JP 2018218821
(43) Date of publication of application: 22.09.2021
(73) Proprietor: Yamaha Hatsudoki Kabushiki Kaisha, Iwata-shi, Shizuoka 438-8501 (JP)
(72) Inventor: IIZUKA, Shinya, Iwata-shi, Shizuoka 438-8501 (JP); IWAKI, Yohei, Iwata-shi, Shizuoka 438-8501 (JP); KOZU, Daisuke, Iwata-shi, Shizuoka 438-8501 (JP); HARANO, Kazuya, Iwata-shi, Shizuoka 438-8501 (JP)
(74) Representative: Stöckeler, Ferdinand
(86) International application number: PCT/JP2019/040838
(87) International publication number: WO 2020/105326

(56) References cited:
- EP-A1- 3 636 505
- JP-A- 2007 016 886
- JP-A- 2014 163 342
- JP-A- 2017 044 072
- US-A1- 2007 021 268
- US-A1- 2012 022 751

## Description

### Technical Field

The present invention relates to a vehicle.

### Background Art

Vehicles driven by power of a power source include a type of vehicle having transmission members provided to have backlash therebetween and engaged to transmit power. As such a vehicle, for example, a vehicle having a dog-typed stepped transmission is known. The dog-typed stepped transmission comprises a plurality of kinds of dogs as transmission members. For example, a first dog among the plurality of kinds of dogs is provided on a drive gear or a driven gear. A second dog is provided so as to be able to fit to the first dog. The first dog and the second dog are fitted or unfitted to each other by relatively moving in the rotating shaft direction of the drive gear. Thus, an effective drive gear and a driven gear are selected. The backlash is provided in the circumferential direction between the first dog and the second dog that are fitted to each other. The backlash in the circumferential direction between the second dog and the first dog has a certain size for smoothly switching a shift stage.

There are cases where a shock to the vehicle is caused by the backlash between the dogs when a drive state of the power source is changed. For example, a shock may occur when the state of the power source switches from the deceleration state (for example, engine brake operating conditions) to the acceleration state while the dogs are fitted. For example, when the state of the power source switches from the deceleration state to the acceleration state, the first dog, which is arranged between the two adjacent second dogs, moves away from one of the second dogs (non-transmitting state), moves for the backlash while accelerating, and then makes contact with the other of the second dogs (transmitting state by dog engagement). In other words, the angular momentum of the first dog is increased in the non-transmitting state due to acceleration while moving from the transmitting state, through the aforementioned non-transmitting state, and then back to the transmitting state again. The re-contact, in which non-transmitting state switches to the transmitting state, transmits the increased angular momentum.

Consequently, the amount of change in the torque output from the stepped transmission resulting from the re-contact, is greater when compared with the case without the backlash, for example. Changes in torque are transmitted to the driving wheels, which causes a shock to the vehicle ultimately.

Techniques to suppress a shock caused by the backlash have been proposed.

For example, Patent Document 1 shows an acceleration and deceleration control device that reduces at least one of the contact speed and the transmission torque between the power transmission members when backlash of the power transmission members is gone at the time of acceleration or deceleration. The acceleration and the deceleration control device detects information on the rotational speed of the input shaft of a specific target portion in the power transmission path, and calculates the relative rotational gap of the input shaft and the output shaft based on the information on the rotational speed. The acceleration and deceleration control device accelerates or decelerates at least one of the input shaft and the output shaft so that at least one of the contact speed and the transmission torque becomes smaller on the basis of the calculated relative rotational gap.

More specifically, for example, when the deceleration state switches to the acceleration state, the acceleration and deceleration control device according to Patent Document 1 reduces the input shaft rotation speed based on the estimated calculation value of the relative rotational gap. As a result, the acceleration and deceleration control device makes relative rotational speed of the input shaft and the output shaft almost zero upon re-contact. According to the acceleration and deceleration control device disclosed in Patent Document 1, the re-contact speed or the transmission torque between the power transmission members such as dogs can be instantly reduced upon the re-contact.

US 2007/021268 A1 teaches an apparatus for estimating a transmission ratio of a power transmission path defined between input and output shafts. Rotational speeds of the input and output shafts are detected, a rotational-speed ratio is calculated based thereon, and it is determined whether or not a difference between the rotational-speed ratios calculated at two different times is within a first threshold. If so, the rotational-speed ratio associated with the later one of the two times is regarded as being the transmission ratio and if not, the rotational speed ratio associated with the earlier one of the two times is regarded as being the transmission ratio.

US 2012/022751 A1 discloses a control system comprising an input shaft rotational speed detector for detecting a rotational speed of an input shaft, a determiner for determining whether driving power transmission members are in a non-contact state based on a change rate of the detected input shaft rotational speed, and a controller for controlling the vehicle to reduce a rotational speed difference between the input shaft and an output shaft when the determiner determines that the driving power transmission members are in the non-contact state.

EP 3 636 505 A1, which is a conflicting application under Art. 54(3) EPC, discloses a vehicle including first and second transmission members having backlash there between and being rotatable relative to each other, the vehicle being capable of suppressing a shock caused by change in state of a drive source, and having improved acceleration or deceleration response.

### Citation List

### Patent document

[Patent Document 1] Japanese Patent No. 4722470

### Summary of Invention

### Technical Problem

However, the vehicles including the transmission members provided to have backlash therebetween are required to achieve a higher acceleration or deceleration response. Namely, such vehicles are required to suppress a shock that may be generated by the backlash between the transmission members when the state of the power source is changed, and are also required to achieve a further improved acceleration or deceleration response.

An object of the present invention is to provide a vehicle including transmission members provided to have backlash therebetween, wherein the vehicle can suppress a shock that may otherwise be generated by the backlash between the transmission members when a state of a power source is changed, and has a further improved acceleration or deceleration response.

### Solution to Problem

The vehicle of the present invention has the following configuration.

(1) A vehicle comprising:
   a driving member for driving the vehicle;
   a power source operating in a region including an acceleration region in which the power source outputs power toward the driving member, and a deceleration region in which the power source is powered by the driving member;
   a first transmission member and a second transmission member that are provided in a power transmission path from the power source to the driving member so as to have backlash therebetween and be relatively rotatable to each other, and are configured for power transmission by being engaged with each other;
   an accelerator operator operated by the driver of the vehicle to demand a power output from the power source; and,
   a control device performing at least one of a power-change-in-acceleration process and a power-change-in-deceleration process, the power-change-in-acceleration process being for changing the power of the power source when a non-transmitting state switches to an acceleration transmitting state, the power-change-in-deceleration process being for changing the power of the power source when the non-transmitting state switches to a deceleration transmitting state, the non-transmitting state being when the first transmission member moves away from the second transmission member in the circumferential direction and power is not transmitted, the acceleration transmitting state being when power is transmitted in the acceleration direction by engagement in which the second transmission member comes into contact with the first transmission member in the circumferential direction, the deceleration transmitting state being when power is transmitted in the deceleration direction by the engagement, wherein
   the power-change-in-acceleration process includes an approaching power increase process and a power reduction process, the approaching power increase process being for increasing the power of the power source in the acceleration region so as to accelerate the approach of the first transmission member to the second transmission member in the non-transmitting state, the power reduction process being for reducing the power of the power source so as to reduce the transmission torque transmitted between the first transmission member and the second transmission member after the approaching power increase process, wherein
   the power-change-in-deceleration process includes an approaching power reduction process and a power increase process, the approaching power reduction process being for reducing the power of the power source to the deceleration region so as to accelerate the approaching of the first transmission member and the second transmission member in the non-transmitting state, the power increase process being for increasing the power of the power source so as to increase the transmission torque transmitted between the first transmission member and the second transmission member after the approaching power increase process, wherein
   the control device controls so that:
      in the power-change-in-acceleration process, the timing for starting the power reduction process after the approaching power increase process is set at the same time as or before a switching timing from the non-transmitting state to the acceleration transmitting state, and the timing for ending the power reduction process is set after the switching timing, and,
      in the power-change-in-deceleration process, the timing for starting the power increase process after the approaching power reduction process is set at the same time as or before a switching timing from the non-transmitting state to the deceleration transmitting state, and the timing for ending the power increase process is set after the switching timing,
      wherein the control device increases a change amount of the power outputted by the power source relative to an amount of operation of the accelerator operator when at least one of the approaching power increase process and the approaching power reduction process is performed, as compared with a change amount of the power outputted when neither the approaching power increase process nor the approaching power reduction process is performed.

In the vehicle, at least one of the power-change-in-acceleration process and the power-change-in-deceleration process is performed. The power-change-in-acceleration process includes an approaching power increase process and a power reduction process. The power-change-in-deceleration process includes an approaching power reduction process and a power increase process. In the approaching power increase process, the power of the power source is increased in the acceleration region so as to accelerate the approach of the first transmission member to the second transmission member. In the approaching power reduction process, the power of the power source is reduced so as to accelerate the approach of the first transmission member to the second transmission member. The time in the non-transmitting state can be shortened by accelerating the approach of the first transmission member to the second transmission member. Accordingly, the responsiveness of acceleration or deceleration can be improved.

The approach of the first transmission member to the second transmission member by the approaching power increase process or the approaching power reduction process is sped up. The first transmission member and the second transmission member are then engaged with each other with a rotational speed difference. Therefore, the angular momentum due to the inertia of the power source and the rotational speed difference tend to be supplied to the driving member via the first transmission member and the second transmission member. It is noted that the angular momentum is not supplied instantly, but is supplied over a period of time from the timing of engagement.

The control device controls so that the timing for starting the power reduction process is set at the same time as or before the switching timing from the non-transmitting state to the acceleration transmitting state. The control device controls so that the timing for ending the power reduction process is set after the switching timing. Thus, the power reduction process is performed at least after the switching timing to the acceleration transmitting state.

Transmission torque transmitted between the first transmission member and the second transmission member can be suppressed by the power reduction process during a period, the period being from at least the timing of engagement until the angular momentum, due to the rotational speed difference between the two transmission members, emerges as a speed change of the vehicle. In other words, the transmission torque transmitted between the first transmission member and the second transmission member can be suppressed during a period in which the angular momentum is supplied from the power source due to the speed difference between the first transmission member and the second transmission member. Thus, for example, the angular momentum actually supplied from the power source is reduced to such a degree that it can be caught by the damper component or the like in the power transmission path. As a result, the shock on the vehicle can be suppressed. Even if the transmission torque is suppressed after the switching timing to the acceleration transmitting state, the shock on the vehicle can be suppressed. Accordingly, for example, making almost zero speed difference isn't required between the first and second transmission members at the timing of engagement. Consequently, there is no need for suppressing the torque of the power source for a long period before the engagement. Therefore, the responsiveness of acceleration can be improved as compared with, for example, the case where the speed difference between the first and second transmission members is adjusted as almost zero.

According to the vehicle described above, the responsiveness of acceleration can be improved while suppressing the shock caused by the state change of the power source due to the backlash. This is also applied to the responsiveness in the converse case to acceleration, that is, in the case where the non-transmitting state switches to the deceleration transmitting state by engagement.

According to the vehicle described above, when at least one of the approaching power increase process and the approaching power reduction process is performed, the amount of change in the power of the power source may be increased with respect to the amount of operation of the accelerator operator by a driver of the vehicle. Accordingly, the responsiveness of acceleration or deceleration can be further improved.

(2) The vehicle according to (1), wherein
the control device changes a command value of power to be outputted by the power source in a stepwise manner when performing at least one of the approaching power increase process and the approaching power reduction process.

The change in power output from the power source is usually delayed relative to the command value. According to the configuration (2), since the command value demanding the change of the power output from the power source changes stepwise, the power output from the power source can also change rapidly. Accordingly, the responsiveness of acceleration or deceleration can be further improved.

(3) The vehicle according to any one of (1) and (2), further comprising a torque detector for detecting a torque-related amount related to the transmission torque, wherein
the control device is configured to perform at least one of the following two processes: the one process being for controlling at least one of an amount for reducing the transmission torque in the power reduction process and a timing for starting the at least one process based on the torque-related amount detected by the torque detector in the power reduction process, the other process being for controlling at least one of an amount for increasing the transmission torque in the power increase process and a timing for starting the at least one process based on the torque-related amount detected by the torque detector in the power increase process.

According to the configuration (3), at least one of the reduction amount of the transmission torque by the power reduction process, the increase amount of the transmission torque by the power increase process, and the timing for starting the process is controlled based on the torque-related quantity related to the transmission torque. Accordingly, at least one of the reduction amount, the increase amount, and the timing for starting the process can be more precisely controlled. Thus, the responsiveness of acceleration can be improved while suppressing the shock on the vehicle.

(4) The vehicle according to (3), wherein
the control device calculates the time frame until the timing of the engagement between the first transmission member and the second transmission member in the circumferential direction based on the torque-related amount detected by the torque detector, and determines the timing for starting the at least one process based on the calculated time frame until the timing of the engagement.

According to the configuration (4), the time to the timing of engagement is calculated based on the torque-related quantity, and the timing for starting the process is determined based on the calculated time.

For example, when the timing for starting the process is determined based on the relative rotational gaps between the first transmission member and the second transmission member, the timing for starting the process cannot be determined until the relative rotational gap changes. In this case, for example, if the process is started based on the relative rotational gap where the backlash between the first transmission member and the second transmission member is small, the start of the process may be delayed with respect to the timing of engagement. According to the configuration (4), since the time to the timing of engagement is calculated based on the torque-related quantity, the timing for starting the process can be determined before the relative rotational gap changes. Accordingly, for example, even in a configuration in which the backlash between the first transmission member and the second transmission member is small, the shock on the vehicle can be suppressed with higher accuracy.

(5) The vehicle according to any one of (1) to (4), wherein
the control device obtains a relative rotational gap of the first transmission member and the second transmission member, and controls a timing for starting the at least one process based on the relative rotational gap.

According to the configuration (5), the timing for starting the process can be controlled based on the relative rotational gaps between the first transmission member and the second transmission member. Thus, the timing for starting the process can be controlled more reliably.

(6) The vehicle according to (5), the vehicle comprising:
a rotational speed detecting unit for detecting information relating to the rotational speed of either only a power input shaft or both the power input shaft and a power output shaft, the power input shaft and the power output shaft relating to the first transmission member and the second transmission member, wherein
the control device obtains the relative rotational gap by calculation of the relative rotational gap based on the information on the rotational speed of the power input shaft.

According to the configuration (6), the relative rotational gap can be obtained by a simple calculation based on information with respect to the rotational speed of the power input shaft.

(7) The vehicle according to any one of (1) to (6), comprising
a stepped transmission, the stepped transmission including:
an input shaft rotatably disposed, into which power is inputted;
an output shaft rotatably disposed on an axis parallel to the input shaft;
a plurality of drive gears provided on the input shaft and configured to continuously rotate together with the input shaft or to be relatively rotatable with the input shaft, each of which corresponds to each shift stage;
a plurality of driven gears provided on the output shaft and configured to continuously rotate together with the output shaft or to be relatively rotatable with the output shaft, and configured to be engageable with a corresponding drive gear, wherein at least one of the plurality of driven gears is continuously engaged with the drive gear; and,
a shift stage setting mechanism configured to mechanically and selectively set the power transmission to be effective from the input shaft to the output shaft via the drive gear and the driven gear relating to any one of the shift stages, wherein
the shift stage setting mechanism includes a mechanism for dog engagement with backlash, the mechanism including a first dog serving as the first transmission member provided in either the drive gear or the driven gear, and a second dog serving as the second transmission member which comes into contact with the first dog with the backlash in the circumferential direction in the each shift stage, the dog engagement established as a result of the dog engagement in which the first dog comes into contact with the second dog in the circumferential direction selecting, as being effective, power transmitted to the drive gear via the input shaft or power transmitted from the driven gear to the output shaft, wherein
the power source outputs power for supplying to the input shaft of the stepped transmission.

The vehicle (7) has a stepped transmission including a mechanism for dog engaging. The mechanism comprises a first dog as a first transmission member and a second dog as a second transmission member. According to this vehicle, the responsiveness of acceleration or deceleration can be further improved while suppressing the shock caused by the backlash of the dog of the stepped transmission.

The first transmission member and the second transmission member provided with the backlash therebetween comprises, for example, a dog. The first transmission member and the second transmission member provided in the power transmission path are, for example, a first dog and a second dog. The engagement between the first transmission member and the second transmission member is, for example, a dog engagement between the first dog and the second dog.

When a plurality of second dogs is arranged at intervals larger than the circumferential length of the first dog in the circumferential direction and the first dog is arranged between the adjacent second dogs, a gap generated between the adjacent second dogs and the first dog is the backlash (Backlash of the transmission members). For example, when the state of the power source switches from the deceleration state to the acceleration state, the first dog between the two second dogs arranged adjacent to each other moves away from one second dog and then re-contacted with the other second dog arranged at the opposite position. The first dog is engaged with the second dog. The interval at which the first dog moves from the time when moving away from one second dog to when it engages the other second dog located at the opposite position is the backlash.

It is noted that the first transmission member and the second transmission member are not particularly limited. The first transmission member and the second transmission member may be, for example, teeth of a gear. The backlash between the first transmission member and the second transmission member may be, for example, a slack between gears. The first transmission member and the second transmission member may be provided at a place other than the stepped transmission. The first transmission member and the second transmission member may be formed of, for example, a chain and a sprocket, or a spline.

For example, the first dog of the stepped transmission is provided on either a drive gear or a driven gear. The second dog that comes into contact with the first dog with backlash in the circumferential direction has a shape generating backlash with the first dog when positioned in a gap between the first dogs adjacent in the circumferential direction, and is provided so as to come into contact with the first dog in the circumferential direction by moving relatively to the first dog in the circumferential direction. The second dog may be provided on either the drive gear or the driven gear, or may be provided on a dog ring that is a member different from the drive gear and the driven gear. The first or second dog may be a projection or a side wall portion defining a hole or groove into which the other dog enters. The shift stage setting mechanism has a first dog and a second dog in each shift stage, but this does not necessarily mean that the shift stage setting mechanism has a first dog and a second dog separately for each shift stage. The shift stage setting mechanism may have a first dog and a second dog so as to perform an operation for mechanically and selectively setting the power transmission to be effective in each shift stage. For example, one dog ring as the second dog may be provided corresponding to two shift stages.

The circumferential direction in which the first dog comes into contact with the second dog is a direction along the rotational direction of the drive gear or the driven gear provided with the first dog.

When the drive gear is relatively rotatable with the input shaft, the drive gear to which power is inputted via the input shaft can be selected by, for example, a first transmission member and a second transmission member provided in a power transmission path between the input shaft and the drive gear. Further, for example, when a hub is interposed between the input shaft and the drive gear, power to the drive gear via the input shaft can be selected by, for example, a first transmission member and a second transmission member provided in a power transmission path between the hub and the drive gear. In this case, power is transmitted between the input shaft and the hub by, for example, a ratchet mechanism.

Power to be transmitted from the driven gear to the output shaft can be selected by, for example, a first transmission member and a second transmission member provided in a power transmission path between the driven gear and the output shaft. Further, for example, when the hub of the driven gear and the output shaft is interposed, the power from the driven gear to the output shaft can be selected by, for example, the first transmission member and the second dog provided in the power transmission path between the hub and the driven gear. In this case, power is transmitted between the output shaft and the hub by, for example, a ratchet mechanism. The term 'hub' here means a cylindrical body that is provided outside the shaft in the radial direction so as to have the same axis as the shaft (input shaft or output shaft) and is relatively rotatable with the shaft. The gear (drive gear or driven gear) is provided so as to be relatively rotatable with the hub in the radial direction of the hub so as to have the same axial center as the hub.

The following timing is observed, for example, by measuring a signal of a command value for power reduction or increase output from the control device. The following timing is observed, for example, by measuring the delay amount of the ignition timing in the combustion cycle of the engine.
- Timing for starting the power reduction process after the approaching power increase process
- Timing for starting the power increase process after the approaching power reduction process
- Timing for ending the power reduction process
- Timing for ending the power increase process

The power reduction process starts immediately after the approaching power increase process. The approaching power increase process shifts to the power reduction process. It is noted that the power reduction process may start after a certain period from the completion of the approaching power increase process.

The start timing X of the process is different from the timing X' at which the power output from the power source is actually changed by the start of the process.

For example, the timing X is before the timing X'. Controlling the timing X so as to be at the same time as or before the switching timing Z from the non-transmitting state to the acceleration transmitting state or the deceleration transmitting state includes, for example, a case where the timing X' is at the same time as the timing Z.

In addition, controlling the timing X so as to be at the same time as the timing Z or before the timing Z includes, for example, a case where the timing X' is before the timing Z.

With respect to the approaching power increase process and the approaching power reduction process, it is preferable that the change of the power of the power source by the process ends at the same time as or before the timing Z.

The end timing Y of the process is different from the timing Y' at which the torque output from the power source is actually changed by the end of the process.

By controlling the timing Y so as to be after the timing Z, for example, the timing Y' becomes after the timing Z.

The time interval between the timing X' and the timing Z is preferably shorter than the time interval between the timing X and the timing Z. The time interval between the timing X and the timing Z is preferably shorter than the time interval between the timing Y and the timing Z. The time interval between the timing X' and the timing Z is preferably shorter than the time interval between the timing Y' and the timing Z. Both suppression of shock and improvement of responsiveness of acceleration can be achieved at a higher level.

The power source operates in a region including an acceleration region and a deceleration region. The acceleration region is a region for outputting power to the driving member. The deceleration region is a region powered from the driving member. The deceleration region is typically the region where the engine brake functions.

The power source may operate in regions other than the acceleration and deceleration regions. The power source may operate, for example, in a region where no power is supplied to the driving member.

The approaching power reduction process or the power reduction process by the control device is, for example, a process for reducing the torque output from the power source. The approaching power increase process or the power increase process by the control device is, for example, a process of increasing the torque output from the power source. However, the power source of the approaching power reduction process, the power reduction process, the approaching power increase process, and the power increase process are not particularly limited, and examples thereof include an engine, an electric motor, or a combination of an engine and an electric motor. In other words, the vehicle may be, for example, an engine vehicle, an electric vehicle, or an engine-motor hybrid vehicle.

If the power source is an engine, the power of the power source can be increased, for example, by increasing the amount of air supplied to the engine. The power of the power source can also be increased by increasing the fuel supplied to the engine. For example, the power of the power source can be increased by increasing the fuel supplied to the engine relative to the stoichiometric fuel.

The electric motor combined with the engine includes a motor having only a function of converting electric power into mechanical power, and a motor generator having a function of generating power by being driven by the engine. In a combination of an engine and an electric motor, the motor is directly connected, for example, to the crankshaft of the engine. However, the way of the connection between the engine and the motor is not limited thereto. The motor and the engine may be connected, for example, via a power transmission.

The power reduction process is a process of reducing the power of the power source in a deceleration region. The power reduction process is not limited thereto, and it is only required to reduce the power of the power source. For example, the power reduction process may reduce the power of the power source in the acceleration region. However, reducing the power of the power source in the deceleration region, for example, enables to correspond to a power transmission path having a high rigidity. The same applies to the power increase process as to the power reduction process. The power increase process is a process of increasing the power of a power source in an acceleration region. The power increase process is not limited thereto, and it is only required to increase the power of the power source. For example, the power increase process may accelerate the power of the power source in the deceleration region. Increasing the power of the power source in the acceleration region, for example, enables to cope with a power transmission path having high rigidity.

A torque detector detects a torque-related quantity. The torque-related quantity is the physical quantity associated with the output torque of the power source. The torque-related quantity increases when the output torque of the power source increases, and decreases when the output torque of the power source decreases. The torque-related quantity is, for example, a combination of the throttle opening and the speed of the power shaft. The combination of throttle opening and power shaft speed represents the output torque of the power source. It is noted that, for example, the speed of the power shaft alone cannot uniquely represent the output torque of the power source, and therefore is different from the torque-related quantity.

The torque-related quantity related to the transmission torque is, for example, the torque input to the transmission member closer to the power source between the first transmission member and the second transmission member. However, the torque-related quantity related to the transmission torque is not limited thereto. The torque-related quantity may be, for example, the output torque of the power source itself. In this case, the output torque as the torque-related quantity is detected by, for example, a detector having a torque sensor provided on the power shaft.

The torque-related quantity may be, for example, output torque obtained from a combination of the throttle opening and the speed of the power shaft.

As the torque-related quantity, for example, a combination of the throttle opening and the speed of the power shaft, and the output torque obtained from the combination may be used in combination.

The torque detector includes, for example, a throttle opening detector and a power shaft speed detector. In this case, the torque output from the power source can be obtained by indirect detection, such as calculation or map reference using the throttle opening and the power shaft speed. However, as a torque detector, for example, a detector provided on a power shaft or a clutch and directly detecting torque can be employed. When the power source is an electric motor, the torque detector may be, for example, a detector for detecting a current supplied to the electric motor. Torque output from the power source can be obtained by indirect detection using current.

A plurality of parameters or a single parameter may be used as the torque-related quantity. The parameter used as the torque-related quantity may be, for example, a parameter for determining or changing the output torque of the power source, or a parameter determined or changed by the torque output from the power source. Parameters for determining or changing the output torque of the power source include, for example, parameters input by the rider to the power source and parameters related to the operating environment of the power source. A parameter input to the power source by the rider includes an operation amount of the accelerator operator. The parameters related to the operating environment of the power source include, for example, intake pressure, air volume, throttle opening, and combustion interval. Parameters determined or changed by the torque output from the power source include, for example, the speed of the power shaft and the crank angle.

The driving member is, for example, a driving wheel of a vehicle. For example, a driving wheel as a driving member drives the vehicle. However, the driving member is not particularly limited, and may be, for example, a screw.

A vehicle is a means of transportation. A vehicle is a manned vehicle or an unmanned means of transportation. A vehicle is, for example, one having driving wheels. One example of a vehicle is a straddled vehicle. A straddled vehicle is one on which a driver straddles a saddle to seat. A vehicle is, for example, a motorcycle. The motorcycle is not particularly limited and includes, for example, a scooter type, a moped type, an off-road type and an on-road type motorcycle. The straddled vehicle is not limited to a motorcycle, and may be, for example, a tricycle or an ATV (All-Terrain Vehicle). A vehicle having driving wheels may be a vehicle in which front wheels, rear wheels, or both front and rear wheels function as driving wheels. A vehicle is not limited to a straddled vehicle, and may be a four-wheeled vehicle having a cabin. The vehicle according to the present invention is not limited to a wheeled vehicle, and may be, for example, a ship having a screw.

The power command value is information for the control device to control the output of the power source. The power command value of the power source is, for example, a signal directly output from the control device as a signal. The power command value of the power source is not limited thereto, and may be output as the throttle opening and ignition angle, for example, when the power source is an engine.

A stepwise change in the command value refers to at least a discontinuous increase or decrease in the command value. The command value changes rapidly by a discontinuous change in the command value. For example, a stepwise change in the command value includes a case where the command value changes gradually after discontinuously increasing or decreasing.

The control device may include a processor for performing the program or may be an electronic circuit.

### Effect of the invention

According to the present invention, in a vehicle comprising transmission members provided with backlash, the responsiveness of acceleration or deceleration can be improved while suppressing the shock on the vehicle caused by the backlash of the transmission members due to a change in the state of a power source.

### Brief description of the drawings

FIG.1 illustrates a schematic configuration of a vehicle according to a first embodiment of the present invention.
FIG.2 is a side view of the vehicle shown in Fig. 1.
FIG.3(A) illustrates a driven gear and a dog ring in a non-transmitting state. FIG.3(B) is a figure showing the driven gear and a dog ring in the acceleration transmitting state.
FIG.3(C) is a partial sectional view in the circumferential direction of the driven gear and the dog ring in the acceleration transmitting state.
FIG.4 is a time chart of a reference example illustrating changes in the output torque of the power source, the relative rotational angle of the gear, and the rotational speed when the deceleration state changes to the acceleration state.
FIG.5 illustrates the configuration of the control device shown in FIG.1.
FIG.6 is a flowchart illustrating the operation of the control device.
FIG.7 is a time chart showing changes in rotational speed, power source torque command value, power source output torque, and drive torque of the driving wheels of the vehicle when the deceleration state changes to the acceleration state.
FIG.8 is a time chart for explaining the dog engagement prediction time obtained in the obtaining process of the dog engagement prediction time shown in FIG.6.
FIG.9 is a time chart showing changes in rotational speed, power source torque command value, power source output torque, and drive torque of the driving wheels when the acceleration state changes to the deceleration state.
FIG.10 is a time chart illustrating prediction of dog engagement of a vehicle according to a second embodiment.
FIG.11 is a time chart showing changes in the rotational speed of the vehicle, the power source torque command value, the power source output torque, and the drive torque of the driving wheels when the deceleration state of the vehicle according to the third embodiment changes to the acceleration state.
FIG.12 is a time chart showing changes in the rotational speed of the vehicle, the power source torque command value, the power source output torque, and the drive torque of the driving wheels when the acceleration state of the vehicle according to the third embodiment changes to the deceleration state.
FIG.13 illustrates a schematic configuration of a vehicle according to a fourth embodiment.

### Description of Embodiments

Hereinafter, the present invention will be described with reference to the drawings based on embodiments.

### [First embodiment]

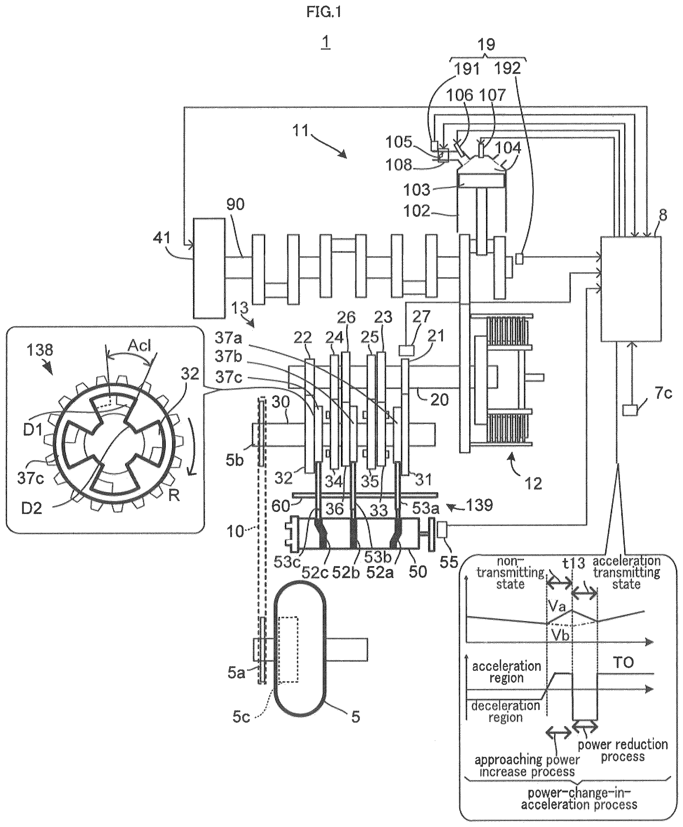

FIG. 1 is for explaining a schematic configuration of a vehicle according to a first embodiment of the present invention. An outline of the vehicle 1 of the present embodiment will be described with reference to FIG. 1.

The vehicle 1 shown in FIG. 1 includes an engine 11, a motor generator 41, driving wheels 5, and a control device 8.

The engine 11 functions as a power source. The engine 11 outputs power. In FIG.1, a 4-cylinder engine is shown as the engine 11. The engine 11 is a 4-stroke engine. FIG.1 schematically shows the configuration of only one cylinder, and the configuration of the remaining cylinders is omitted. The engine 11 includes a power shaft 90, a cylinder 102, a piston 103, and an ignition plug 107. The power shaft 90 is a crankshaft.

The piston 103 is reciprocatably provided in the cylinder 102. The ignition plug 107 is provided in a combustion chamber 104 formed in the cylinder 102. An intake passage leading to the combustion chamber 104 is provided with a throttle valve 105 and a fuel injection device 106. The operation of the throttle valve 105, the fuel injection device 106, and the ignition plug 107 is controlled by the control device 8.

The throttle valve 105 regulates the amount of air supplied to the combustion chamber 104. The fuel injection device 106 supplies fuel to the combustion chamber 104. The air-fuel mixture supplied to the combustion chamber 104 is burned by ignition of the ignition plug 107 to reciprocate the piston 103. The reciprocating motion of the piston 103 is converted into the rotation of the power shaft 90. The torque of the power shaft 90 is outputted from the engine 11.

The motor generator 41 is connected to the engine 11 so as to work together with the engine 11. The motor generator 41 may output power via power shaft 90 to assist in driving engine 11. In this case, the motor generator 41 functions as a power source together with the engine 11. The motor generator 41 is driven by the engine 11 and may function as a generator. The operation of motor generator 41 is controlled by the control device 8.

The vehicle 1 is also provided with a clutch 12, a stepped transmission 13, a torque detector 19, and a shift detector 55. The clutch 12 is provided between the engine 11 and the stepped transmission 13 in the torque transmission path. The clutch 12 interrupts power transmitted between the engine 11 and the stepped transmission 13. The clutch 12 interrupts power in accordance with the operation of the driver.

The stepped transmission 13 is connected to the clutch 12. The stepped transmission 13 has a plurality of shift stages. The stepped transmission 13 has an input shaft 20, an output shaft 30, a drive gear (21 to 26), a driven gear (31 to 36), and a shift stage setting mechanism 139.

The input shaft 20 is rotatably disposed, and power is inputted thereto. Power output from the engine 11 is inputted to the input shaft 20 via the clutch 12. The stepped transmission 13 changes the rotational speed of the output shaft 30 stepwise with respect to the input shaft 20.

The output shaft 30 is rotatably disposed on an axis parallel to the input shaft 20. The plurality of drive gears (21 to 26) is provided on an input shaft 20 and configured to continuously rotate together with the input shaft 20. In addition, each of the plurality of drive gears (21 to 26) corresponds to each shift stage. The plurality of driven gears (31 to 36) is provided on the output shaft 30 and configured to be relatively rotatable with the output shaft 30. The plurality of driven gears (31 to 36) is configured to be engageable with corresponding drive gears (21 to 26). At least one of a plurality of driven gears (31 to 36) is continuously engaged with drive gears (21 to 26).

More specifically, the plurality of drive gears (21 to 26) provided in the stepped transmission 13 shown in FIG. 1 is configured to continuously rotate together with the input shaft 20. The plurality of driven gears (31 to 36) is configured to be rotatable relative to the output shaft 30. In addition, each of the plurality of driven gears (31 to 36) is continuously engaged with drive gears (21 to 26).

The shift stage setting mechanism 139 is configured to mechanically and selectively set power transmission to be effective from an input shaft 20 to an output shaft 30 via a drive gear (21 to 26) and a driven gear (31 to 36) relating to any one of the shift stages.

The shift stage setting mechanism 139 has a dog engaging mechanism with backlash 138. The dog engaging mechanism with the backlash 138 has a first dog D1 and a second dog D2. In other words, the vehicle 1 has a first dog D1 and a second dog D2. The dog engaging mechanism with the backlash 138 mechanically and selectively sets either power to a drive gear (21 to 26) through an input shaft 20 or power to an output shaft 30 from a driven gear (31 to 36) to be effective.

More specifically, the first dog D1 of the stepped transmission 13 shown in FIG.1 is provided on a driven gear (31 to 36). The first dog D1 is a plurality of projections arranged at intervals in the circumferential direction on the driven gear (31 to 36). The first dog D1 projects from the driven gear (31 to 36) in the axial direction of the output shaft 30. In addition, the dog engaging mechanism with the backlash 138 has a plurality of dog rings (37a to 37c). The second dog D2 is provided in dog rings (37a to 37c). The second dog D2 is a plurality of projections arranged at intervals in the circumferential direction on an annular dog ring (37a to 37c).

The dog rings (37a to 37c) are provided on the output shaft 30 so as to be movable on the axis of the output shaft 30. The dog rings (37a to 37c) are configured to continuously rotate together with the output shaft 30. Any of the dog rings (37a to 37c) moves on the axis of the output shaft 30 to engage with any of the driven gears (31 to 36). In other words, the first dog D1 is inserted into the interval between the second dogs D2 arranged with an interval, and the second dog D2 comes into contact with the first dog D1 in the circumferential direction, which results in the dog engagement in which power is transmitted. The circumferential direction includes the rotational direction R of the driven gear (31 to 36) and the dog ring (37a to 37c). The dog engagement transmits power in the rotational direction R.

The first dog D1 is an example of the first transmission member. The second dog D2 is an example of the second transmission member. The input shaft 20 is an example of either only the power input shaft or both the power input shaft and the power output shaft relating to the first dog D1 and the second dog D2. The output shaft 30 is an example of a power output shaft.

The shift stage setting mechanism 139 selectively and effectively sets a path through which power is transmitted. The shift stage setting mechanism 139 moves a dog ring (37a to 37c) so that one of the driven gears (31 to 36) is engaged with a corresponding dog ring (37a to 37c). A dog engaging mechanism with backlash 138 makes a path of power transmission effective by dog engagement in which a first dog D1 of a driven gear (31 to 36) selected by a shift stage setting mechanism 139 comes into contact with a second dog D2 provided on a dog ring (37a to 37c) in a circumferential direction. In this way, the dog engaging mechanism with backlash 138 mechanically and selectively sets the power from the driven gear (31 to 36) to the output shaft 30 to be effective.

The driving wheel 5 is driven by an engine 11 to travel the vehicle 1. The driving wheel 5 is an example of a driving member. Power transmitted from the input shaft 20 of the stepped transmission 13 to the output shaft 30 is transmitted through the driving sprocket 5b, the drive chain 10, the rear wheel driving sprocket 5a, and the hub damper 5c to the driving wheels 5. Thus, the driving wheel 5 is driven, and the vehicle 1 travels. The driving sprocket 5b, the drive chain 10, the rear wheel driving sprocket 5a, and the hub damper 5c comprises a power transmission path for transmitting power. Power deforms the hub damper 5c provided on a power transmission path. Thus, the hub damper 5c temporarily holds a part of the power transmitted in the power transmission path.

Power is transmitted from the engine 11 of the vehicle 1 to the driving wheels 5 through a power transmission path. The clutch 12, the stepped transmission 13, the driving sprocket 5b, the drive chain 10, the rear wheel driving sprocket 5a, and the hub damper 5c are included in the power transmission path.

A shift stage detector 55 detects a shift stage of which power transmission is effectively set by a shift stage setting mechanism 139. The shift stage detector 55 supplies a signal representing the shift stage to the control device 8.

The torque detector 19 detects a torque-related quantity that relates to the output torque of the engine 11 and represents the output torque. In the present embodiment, the torque detector 19 includes a throttle opening detector 191 and a power shaft speed detector 192. The combination of the opening of the throttle valve 105 detected by the throttle opening detector 191 and the rotational speed of the power shaft 90 detected by the power shaft speed detector 192 is a torque-related quantity. Obtaining of the torque-related quantity may include torque calculation in the control device 8. In the present embodiment, the output torque of the engine 11 is obtained as a torque-related quantity.

In the vehicle 1, power generated in the engine 11 is normally transmitted to a power shaft 90, a clutch 12, an input shaft 20 of a stepped transmission 13, a drive gear (21 to 26), a driven gear (31 to 36), a driven gear (first dog D1), a dog ring (second dog D2), an output shaft 30, a drive chain 10, and a driving wheel 5 in order. Hereinafter, the position of each component may be referred to as upstream or downstream with respect to the direction of the power transmission flow.

The control device 8 controls the engine 11. The control device 8 is specifically an ECU (Engine Control Unit). The control device 8 controls at least one of the opening of the throttle valve 105, the supply amount of fuel by the fuel injection device 106, and the timing of ignition by the ignition plug 107 to control the decrease and increase of the output torque output from the engine 11. The control device 8 reduces power output from the engine 11, for example, by delaying the timing of ignition by the ignition plug 107 in a combustion cycle as the engine 11.

The control device 8 performs at least one of power-change-in-acceleration process and power-change-in-deceleration process. Specifically, the control device 8 of the present embodiment performs both the power-change-in-acceleration process and the power-change-in-deceleration process. The control device 8 outputs a torque command value for controlling the power output from the engine 11.

The engine 11 operates in a region including an acceleration region and a deceleration region. The acceleration region is an operation region for outputting power to the driving wheels 5. The deceleration region is an operation region for receiving power from the driving wheels 5.

The power-change-in-acceleration process is a process of changing the power output from the engine 11 when the state of the dog engaging mechanism with the backlash 138 switches from the non-transmitting state to the acceleration transmitting state. In the non-transmitting state, the first dog D1 included in the dog engaging mechanism with the backlash 138 moves away from the second dog D2 in the circumferential direction and power is not transmitted. In the acceleration transmitting state, power is transmitted in the acceleration direction by the dog engagement in which the second dog D2 comes into contact with the first dog D1 in the circumferential direction.

The power-change-in-acceleration process includes an approaching power increase process and a power reduction process. The approaching power increase process is a process of increasing the power (torque T) of the engine 11 in the acceleration region when the state of the dog engaging mechanism with the backlash 138 is in the non-transmitting state. The power reduction process is a process of reducing the power of the engine 11 in a deceleration region after the approaching power increase process.

The power-change-in-deceleration process is a process of changing the power output from the engine 11 when the state of the dog engaging mechanism with backlash 138 switches from the non-transmitting state to the deceleration transmitting state. In the deceleration transmitting state, power is transmitted in the deceleration direction by the dog engagement in which the second dog D2 comes into contact with the first dog D1 in the circumferential direction.

The power-change-in-deceleration process includes an approaching power reduction process and a power increase process. The approaching power reduction process is a process of reducing the power of the engine 11 (torque T) in the deceleration region when the state of the dog engaging mechanism with backlash 138 is in the non-transmitting state. The power increase process is a process of increasing the power of the engine 11 in the acceleration region after the approaching power reduction process.

The control device 8 controls either the timing for starting the power reduction process and the power increase process or the timing for ending the process so as to be the same time as the switching timing from the non-transmitting state to the transmitting state or before the switching timing (t13). Further, the control device 8 controls the timing for ending the power reduction process and the power increase process to be after the switching timing from the non-transmitting state to the transmitting state (t13). FIG. 1 shows only the timing of power reduction process. The details of the power increase process will be described later.

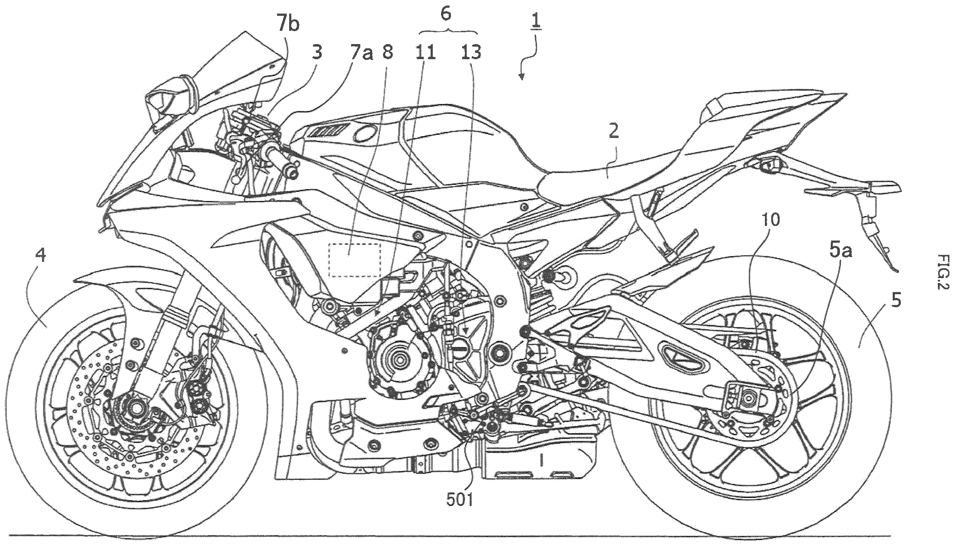

FIG.2 is a side view of the vehicle 1 shown in FIG.1.

The vehicle 1 shown in FIGS. 1 and 2 is a straddled vehicle. The vehicle 1 is configured to be rotatable in a lean position. The vehicle 1 comprises an engine unit 6. The engine 11 and the stepped transmission 13 are included in an engine unit 6. The power of the engine 11 is controlled by the control device 8. The vehicle 1 comprises a seat 2, a handle 3, wheels 4 and 5, a clutch lever 7a, an accelerator operator 7b, and a shift pedal 501. The clutch lever 7a and the accelerator operator 7b are provided on the handle 3 so as to be operated by hands of a driver. The shift pedal 501 is provided so as to be operated by feet of a driver. The operation of the driver to the shift pedal 501 is inputted to the stepped transmission 13 as a shift operation. Between the wheels 4 and 5 shown in the figure, the rear wheel 5 is a driving wheel 5.

The power output from the engine 11 is transmitted to the stepped transmission 13. The power transmitted to the stepped transmission 13 is transmitted to the driving wheels 5 through the drive chain 10, the rear wheel driving sprocket 5a, and the hub damper 5c.

Referring again to FIG. 1, the stepped transmission 13 of the present embodiment will be described in more detail.

The input shaft 20 is configured to input power from the power shaft 90 of the engine 11. Power of the power shaft 90 is inputted to the input shaft 20 when the clutch 12 is in a connected state.

The input shaft 20 is provided with a plurality of drive gears 21 to 26. The plurality of drive gears 21 to 26 is arranged from the right end of the input shaft 20 in FIG. 1 in the order of a first speed drive gear 21, a third speed drive gear 23, a fifth speed drive gear 25, a sixth speed drive gear 26, a fourth speed drive gear 24, and a second speed drive gear 22. The output shaft 30 is provided with a plurality of driven gears 31 to 36. The plurality of driven gears 31 to 36 is arranged from the right end of the output shaft 30 in FIG. 1 in the order of a first driven gear 31, a third driven gear 33, a fifth driven gear 35, a sixth driven gear 36, a fourth driven gear 34, and a second driven gear 32. A drive gear 21 to 26 and a driven gear 31 to 36 are provided so as to be engaged with each other at the same position in the axial direction of an input shaft 20 and an output shaft 30 for each set of shift stages.

A shift stage setting mechanism 139 effectively sets power transmission from an input shaft 20 to an output shaft 30 via a drive gear 21 to 26 and a driven gear 31 to 36 in any one set of shift stages. The shift stage setting mechanism 139 comprises a shift cam 50, shift forks 53a to 53c, a fork guide shaft 60, and a dog engaging mechanism with backlash 138. Cam grooves 52a to 52c are formed on the outer peripheral surface of the shift cam 50. The cam grooves 52a to 52c receive parts of the shift forks 53a to 53c, respectively, so that the shift forks 53a to 53c are guided by the cam grooves 52a to 52c to move in the axial direction as the shift cam rotates.

When the shift pedal 501 (See Figure 2) is operated to rotate the shift cam 50, the shift forks 53a to 53c moves in the axial direction in accordance with the cam grooves 52a to 52c. This causes the dog rings 37a to 37c to move in the axial direction with the shift forks 53a to 53c. The path of power transmission is selected by moving of the dog rings 37a to 37c so as to engage with one of the driven gears (31 to 36). A second dog D2 provided in a dog ring (37a to 37c) and a first dog D1 of a driven gear (31 to 36) selected by a shift stage setting mechanism 139 have a contact with each other in the circumferential direction to make dog engagement.

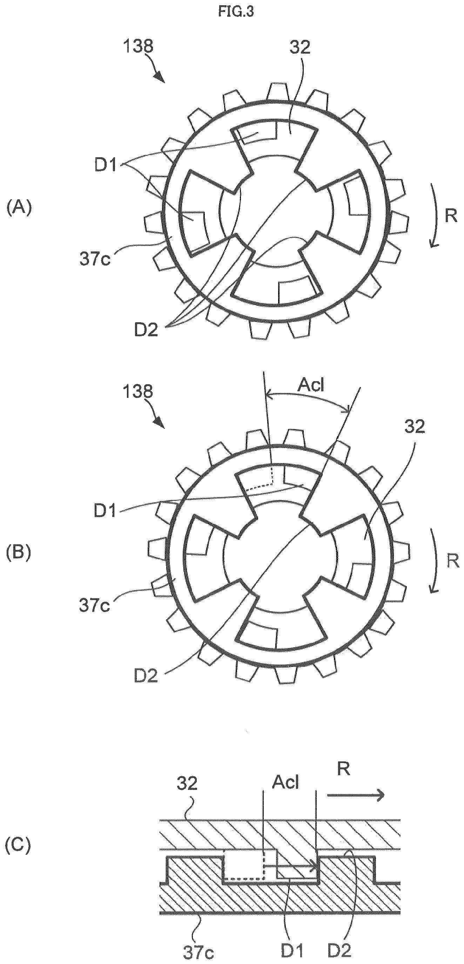

FIG. 3(A) shows the driven gear 32 and the dog ring 37c in the non-transmitting state. FIG. 3(B) shows the driven gear 32 and the dog ring 37 c in the acceleration transmitting state. FIG. 3(C) is a partial cross-sectional view in the circumferential direction of the driven gear 32 and the dog ring 37c in the acceleration transmitting state. FIGS. 3 (A) to (C) show a dog engaging mechanism with backlash 138 having a first dog D1 and a second dog D2.

FIGS. 3 (A) to 3 (C) show, as examples of the driven gear (31 to 36) and the dog ring (37a to 37c), the driven gear 32 and the dog ring 37c corresponding to the second speed. However, the basic structure of the driven gear 32 and the dog ring 37c is the same in other shift stages.

The first dog D1 is a plurality of protrusions arranged at intervals in the circumferential direction on the driven gear 32. The circumferential direction is a direction along the rotational direction R of the driven gear 32 and the dog ring 37c. The first dog D1 projects from the driven gear 32 in the axial direction of the output shaft 30. The second dog D2 forms a plurality of recesses arranged at intervals in the circumferential direction on the dog ring 37c. The first dog D1 shown in the figure is inserted into the interval between the second dogs D2 arranged in the circumferential direction. The length of the interval in the circumferential direction between the second dogs D2 arranged in the circumferential direction is larger than the length in the circumferential direction of the first dog D1. The first dog D1 is inserted with backlash in the interval between the second dogs D2 arranged in the circumferential direction. The first dog D1 and the second dog D2 are provided so as to have backlash therebetween and to be relatively rotatable to each other.

Since the length of the interval between the second dogs D2 in the circumferential direction is larger than the length in the circumferential direction of the first dog D1, the first dog D1 is easy to enter between the second dogs D2 when the dog ring 37c moves toward the driven gear 32 in the axial direction. When the dog ring 37c moves away from the driven gear 32 in the axial direction, the first dog D1 is easy to be pulled out from between the second dogs D2. Accordingly, the first dog D1 and the second dog D2 are smoothly engaged and disengaged in the shift up and the shift down.

The rotational direction R shown in FIGS.3(A) to 3(C) indicates the direction in which the driven gear 32 and the dog ring 37c rotate when the vehicle 1 travels. Therefore, the rotational direction R indicates the direction of the torque generated in the driven gear 32 in the acceleration state. The rotational direction R is also referred to as an acceleration direction R.

In the acceleration transmitting state in FIG.3(B), torque is transmitted from the first dog D1 to the second dog D2 in the acceleration direction R by the dog engagement in which the first dog D1 comes into contact with the second dog D2 in the circumferential direction. The first dog D1 and the second dog D2 are configured so that they can transmit torque by engaging with each other.

For example, during traveling of the vehicle 1, when the engine 11 changes from a deceleration transmitting state driven by power from the driving wheels 5 to an acceleration state where torque of acceleration is outputted from the engine 11, the driven gear 32 rotates in the acceleration direction R relative to the dog ring 37c from a position of a non-transmitting state shown in FIG.3(A). The driven gear 32 rotates with respect to the dog ring 37c by a backlash angle Acl to the position shown in FIG.3(B). At the position of the driven gear 32 shown in FIG.3(B), the first dog D1 is brought into a dog engagement state where the first dog D1 comes into contact with the second dog D2 in the circumferential direction.

Through this series of operations, a non-transmitting state in which the first dog D1 moves away from the second dog D2 in the circumferential direction and power is not transmitted ((A) of Figure 3) switches to an acceleration transmitting state in which power is transmitted in the acceleration direction R by the dog engagement in which the second dog D2 comes into contact with the first dog D1 in the circumferential direction. As a result, the power for acceleration is transmitted from the input shaft 20 of the stepped transmission 13 (See Figure 1) to the output shaft 30.

Before the non-transmitting state shown in FIG.3(A) switches to the acceleration transmitting state shown in FIG.3(B), the driven gear 32 is not engaged with the dog ring 37c to be driven. During this period, the torque of acceleration is not transmitted from the engine 11 to the driving wheels 5. In the present embodiment, the approaching power increase process is performed. Thus, the approach of the first dog D1 to the second dog D2 is accelerated. Therefore, the second dog D2 engages with the first dog D1 in a short time. In other words, the time in the non-transmitting state can be shortened. Accordingly, the responsiveness of acceleration is improved.

The rotational speed of the driven gear 32 is increased by the approaching power increase process. Further, the driven gear 32 is not engaged with the dog ring 37c to be driven before the non-transmitting state switches to the acceleration transmitting state. Consequently, the driven gear 32 does not receive the resistance of rotation from the dog ring 37c. Therefore, the increase amount of the rotational speed of the driven gear 32 is large.

When the driven gear 32 rotating at the increased rotational speed engages with the dog ring 37c, the angular momentum of the rotation of the driven gear 32 is transmitted to the dog ring 37c in addition to the output torque of the engine 11. In other words, in addition to the output torque of the engine 11, the force due to inertia from the driven gear 32 is transmitted from the first dog D1 to the second dog D2. The angular momentum transmitted from the driven gear 32 includes the angular momentum of rotation of a member disposed upstream of the power transmission path from the driven gear 32. The angular momentum of rotation of the member disposed upstream of the driven gear 32 in the power transmission path includes the angular momentum of rotation of, for example, the motor generator 41, the drive gear 22, the input shaft 20, the clutch 12, and the power shaft 90. Accordingly, when the states of the first dog D1 and the second dog D2 switch from the non-transmitting state (Figure 3(A)) to the acceleration transmitting state (Figure 3(B)), for example, the angular momentum larger than the angular momentum that is due to the rotation of the driven gear 32 alone is transmitted in a short period. In other words, a larger angular momentum is transmitted from the driven gear 32 to the dog ring 37c in a short period of time.

The angular momentum transmitted to the dog ring 37c in a short period of time is transmitted from the output shaft 30 of the stepped transmission 13 to the driving wheels 5 (See Figure 2). As a result, a shock occurs in the power of the driving wheels 5.

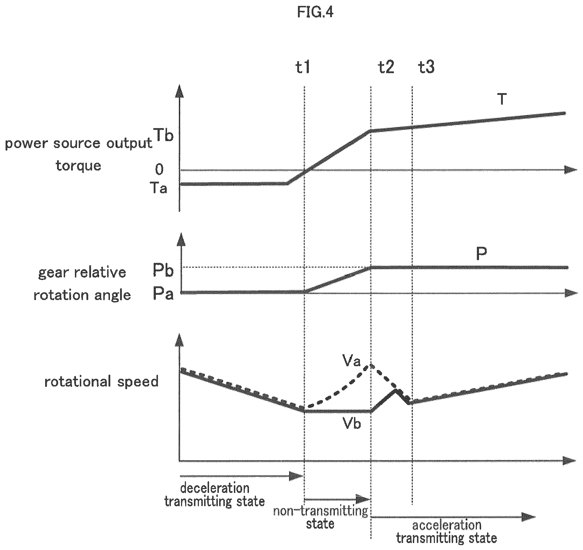

FIG.4 is a time chart of a reference example showing changes in output torque, gear relative rotational angle, rotational speed, and the like of the engine 11 when the deceleration transmitting state changes to the acceleration transmitting state. FIG.4 also shows, as a reference example, changes in the case where the power reduction process is not performed.

FIG.4 shows a power source output torque T, a gear relative rotational angle P, a rotational speed Va of the engine 11, and a driving wheel rotational speed Vb when the engine 11 of the vehicle 1 changes from a deceleration transmitting state to an acceleration state. The gear relative rotational angle P is a relative rotational angle of the driven gear 32 with respect to the dog ring 37c shown in FIGS.3(A) and 3(B). The power source output torque T can be obtained by directly measuring the output torque of the engine 11. The power source output torque T can also be obtained based on the opening of the throttle valve 105 detected by the throttle opening detector 191 and the rotational speed of the power shaft 90 detected by the power shaft speed detector 192. The power shaft rotational speed Va indicates the rotational speed of the power shaft 90. The changes of the power shaft rotational speed Va indicate the changes of the rotational speed of the input shaft 20. The driving wheel rotational speed Vb indicates the speed of the vehicle 1. For convenience of comparison, the driving wheel rotational speed Vb is shown by converting the ratio between the rotational speed of the power shaft 90 in the vehicle 1 and the rotational speed of the driving wheel 5 into a value corresponding to the rotational speed of the power shaft 90.

The engine 11 is in a deceleration transmitting state until time t1. The engine 11 outputs a negative torque Ta in the deceleration transmitting state. In other words, the engine 11 outputs negative power. The negative torque Ta is a deceleration torque in a direction preventing the rotation of the power shaft 90. The negative torque Ta is a torque generated when the torque generated by the combustion operation of the engine as the engine 11 is smaller than the force of the rotational resistance received by the engine 11 from the engine itself 11 and the configuration located downstream thereof. Negative torque and negative power mean that the engine 11 is driven as a load. In other words, the engine 11 that outputs the negative torque Ta is driven by power from the driving wheels 5. The deceleration transmitting state is a state in which a so-called engine brake operates. In the deceleration transmitting state, torque in the direction opposite to the rotational direction R is applied to the driven gear 32 shown in FIG. 3 by the engine 11.

For example, when the opening degree of the throttle valve 105 (See Figure 1) increases, the engine 11 changes from the deceleration transmitting state to the acceleration state. The power source output torque T changes from the negative torque Ta to the positive torque Tb at time t1. Changing of the power source output torque T from the negative torque Ta to the positive torque Tb generates torque in the driven gear 32 shown in FIG. 3 in the rotational direction R.

After the power source output torque T changes to a positive value, as shown in FIG. 3(A), the non-transmitting state occurs in which the first dog D1 moves away from the second dog D2 in the circumferential direction and the power is not transmitted. The non-transmitting state continues until the relative rotational angle of the driven gear 32 reaches an angle Pb. The difference between the angle Pa and the angle Pb is equal to a backlash angle Acl shown in FIG. 3(B). The driven gear 32 rotates by the backlash angle Acl in a non-transmitting state.

The approach of the first dog D1 to the second dog D2 is accelerated by the approaching power increase process. In the non-transmitting state, the rotational speed Va of the power shaft 90 is increased by the power from the engine 11. During this period, the drive torque output from the output shaft 30 of the stepped transmission 13 to the driving wheels 5 is zero. In other words, the engine 11 does not drive the driving wheels 5 from time t1 to time t3. Accordingly, the power shaft 90 largely accelerates. The increase rate of the rotational speed Va of the power shaft 90 is larger than, for example, the increase rate in the period after the time t5.

On the other hand, power of the engine 11 is not transmitted to the driving wheels 5. The driving wheel rotational speed Vb is reduced by the resistance received by the driving wheel 5.

At time t2, the first dog D1 comes into contact with the second dog D2 in the circumferential direction to be engaged with the second dog D2 as shown in FIG. 3(B). The non-transmitting state switches to the acceleration transmitting state. When the non-transmitting state switches to the acceleration transmitting state, the angular momentum of the driven gear 32 rotating at the rotational speed Va increased in the non-transmitting state is transmitted to the driving wheel 5 via the dog ring 37c. The angular momentum of the rotation of the driven gear 32, more specifically, the angular momentum of the driven gear 32 including the angular momentum of the rotation of a member upstream from the driven gear 32 in a power transmission path, and the output torque of the engine 11 are discharged through the driving wheels 5. As a result, the power shaft rotational speed Va decreases and the driving wheel rotational speed Vb increases. After the time t2 when the non-transmitting state switches to the acceleration transmitting state, the driving wheel rotational speed Vb rapidly increases.

At time t3 after time t2 of the dog engagement, the rate of change of the power shaft rotational speed Va and the rate of change of the driving wheel rotational speed Vb are substantially the same. At time t3, the rate of change of the power shaft rotational speed Va is synchronized with the rate of change of the driving wheel rotational speed Vb. The difference between the rate of change of the power shaft rotational speed Va and the rate of change of the driving wheel rotational speed Vb before time t3 is absorbed by, for example, a damper component (not shown) included in the power transmission path from the engine 11 to the driving wheel 5. The angular momentum released between time t2 and t3 becomes a shock in the power of the vehicle 1. This shock occurs after time t2, which is after time t1 when the state of the engine 11 changes from the deceleration transmitting state to the acceleration state. Consequently, the timing when the shock to the vehicle is generated is further delayed with respect to the timing of the acceleration operation.

The driving wheel rotational speed Vb shown in FIG.4 represents a converted value obtained by multiplying the speed of the vehicle 1 by the ratio of the entire transmission path assuming constant speed travel. In the example shown in FIG.4, at time t3, the difference among the power shaft rotational speed Va, the driving wheel rotational speed Vb and the converted value becomes substantially the same. In other words, at time t3, the power shaft rotational speed Va is synchronized with the driving wheel rotational speed Vb.

Shock occurring when the deceleration transmitting state of the engine 11 changes to the acceleration state have been described above, and such a shock also occur when the acceleration state changes to the deceleration transmitting state under the condition where the power increase process is not performed. It is noted that the changes in the direction of the torque and the rotational speed are opposite to those described above. In other words, torque is applied to the first dog D1 in the deceleration direction opposite to the rotational direction R in FIG. 3(B). When the non-transmitting state switches to the deceleration transmitting state due to dog engagement between the first dog D1 and the second dog D2, the rotational speed of the power shaft is reduced. Also in this case, a shock to the vehicle 1 occurs.

In the vehicle 1 of the present embodiment, the rotational speed of the driven gear 32 is increased by the approaching power increase process. Accordingly, the second dog D2 engages with the first dog D1 in a short time. Thus, the responsiveness of acceleration is improved. Further, in the vehicle 1 of the present embodiment, after the approaching power increase process, the power reduction process reduces the power output from the engine 11. Accordingly, the shock described above is suppressed. Consequently, in the vehicle 1 of the present embodiment, the shock can be suppressed without reducing the backlash angle Acl of the dog ring shown in FIG.3 or changing the shape of the dog to be special. Moreover, the responsiveness of acceleration is improved.

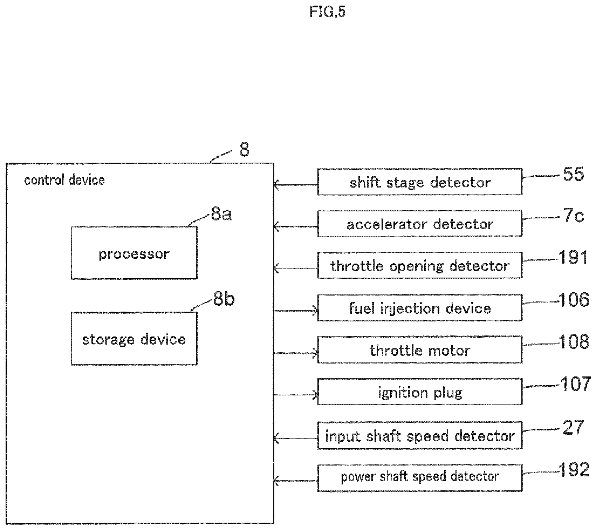

FIG.5 shows the configuration of the control device 8 shown in FIG.1.

The control device 8 comprises a processor 8a for performing programs and a storage device 8b for storing programs and data. In the control device 8, the processor 8a performs the program stored in the storage device 8b to control the engine 11. At this time, the processor 8a performs the approaching power increase process, the power reduction process, the approaching power reduction process, and the power increase process, which will be described later.

The control device 8 is connected with a shift stage detector 55, an accelerator detector 7c, a throttle opening detector 191, a fuel injection device 106, a throttle motor 108, and an ignition plug 107. The accelerator detector 7c detects an operation amount of an accelerator operator 7b (See Figure 2). The ignition plug 107 is connected to the control device 8 via an ignition device, which is not shown. The control device 8 is connected to a power shaft speed detector 192 and an input shaft speed detector 27. The input shaft speed detector 27 detects information regarding the rotational speed of the input shaft 20. The input shaft speed detector 27 is one example of a rotational speed detecting unit.

The control device 8 controls the throttle motor 108, the fuel injection device 106, and the ignition plug 107 to control the power output from the engine 11.

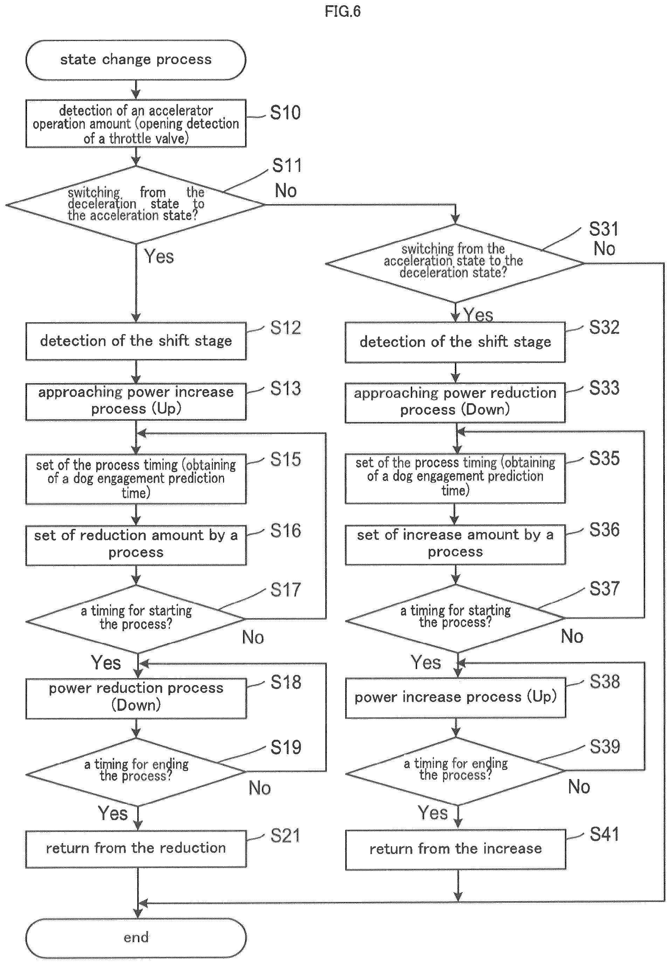

FIG.6 is a flowchart for explaining the operation of the control device.

FIG.6 shows a process in which the state of the stepped transmission 13 switches from the non-transmitting state to the acceleration transmitting state, and a process in which the state switches from the non-transmitting state to the deceleration transmitting state among processes performed by the control device. The process shown in FIG. 6 is performed together with other processes for controlling the engine 11, such as a process for controlling the opening of the throttle valve 105 based on the detection of the accelerator detector 7c.

The control device 8 detects an accelerator operation amount (S10). The control device 8 obtains the accelerator operation amount detected by the accelerator detector 7c.

In step S10, the control device 8 can detect the opening of the throttle valve 105 instead of the accelerator operation amount. In this case, the throttle opening detector 191 detects the opening of the throttle valve 105. The control device 8 can also detect the output torque of the engine 11 instead of detecting the accelerator operation amount. A power shaft speed detector 192 included in the torque detector 19 detects the rotational speed of the power shaft 90. The combination of the opening of the throttle valve 105 and the rotational speed of the power shaft 90 represents the output torque. The opening of the throttle valve 105 and the rotational speed of the power shaft 90 are correlated with the output torque. The control device 8 obtains output torque from the opening of the throttle valve 105 and the rotational speed of the power shaft 90. The control device 8 calculates an equation using the opening of the throttle valve 105 and the rotational speed of the power shaft 90 as variables to detect the output torque from the engine 11. It is noted that, as a method of detecting the output torque, for example, a method of referring to a preset map based on the opening of the throttle valve 105 and the rotational speed of the power shaft 90 can be adopted.

In step S10, the control device 8 changes the torque command value for controlling the power output from the engine 11 in accordance with the amount of change in the accelerator operation amount. The power output from the engine follows the accelerator operation amount.

The control device 8 determines whether the deceleration transmitting state has switched to the acceleration state (S11). The control device 8 determines whether the deceleration transmitting state has switched to the acceleration state according to the change in the accelerator operation amount obtained in step 10. The control device 8 determines that the deceleration transmitting state has switched to the acceleration state when, for example, the accelerator operation amount changes from a value below a predetermined reference value to a value larger than the reference value (Yes in S11). It is noted that the control device 8 can also determine whether the deceleration transmitting state has switched to the acceleration state by using the degree of the opening of the throttle valve 105 or the torque of the engine 11 instead of the accelerator operation amount.

The control device 8 stores the past state of the accelerator operation amount, for example, and compares the past state with the current state to determine whether the deceleration transmitting state has changed to the acceleration state.

When the deceleration transmitting state changes to the acceleration state (Yes in S11), the control device 8 detects the shift stage selected by the stepped transmission 13 (S12). More specifically, the control device 8 obtains information on the shift stage detected by the shift stage detector 55.

Subsequently, the control device 8 performs an approaching power increase process (S13). The control device 8 increases the output torque from the engine 11 so as to accelerate the approach of the first dog D1 to the second dog D2 in the non-transmitting state. The control device 8 sets, for example, a large value out of a predetermined increase value or a command value corresponding to the accelerator operation amount as the power source torque command value. The command value is a value belonging to the acceleration region. The command value is a predetermined value as a target for accelerating the approach of the first dog D1 to the second dog D2. The increase value is set to a value larger than a command value corresponding to a normal accelerator operation amount. As a result, the output torque from the engine 11 increases in the acceleration region.

When the approaching power increase process (S13) is performed, the control device 8 increases the amount of change in the power of the power source with respect to the accelerator operation amount as compared with the amount of change when, for example, the approaching power increase process (S13) is not performed.

It is noted that when the control device 8 performs the approaching power increase process (S13), the control device 8 may set a predetermined increasing value as the power source torque command value regardless of the magnitude of the command value corresponding to the accelerator operation amount. In this case, the magnitude of the shock can be suppressed within a predetermined range regardless of the magnitude of the operation by the driver of the vehicle. As a result, for example, the control device 8 can easily learn the characteristics of an appropriate response to a shock.

In the approaching power increase process, a predetermined increase value is outputted as a power source torque command value, so that the power source torque command value increases stepwise. As a result, the output torque from the engine 11 also increases rapidly.

Subsequently, the control device 8 sets the process timing (S15). In this step S15, the control device 8 obtains the timing of the dog engagement. The control device 8 obtains a dog engagement prediction time. The dog engagement prediction time represents the remaining time before the second dog D2 engages with the first dog D1. As will be described later, the process start timing is not the same as the dog engagement timing. However, the process start timing is determined based on the dog engagement prediction time.

In addition, the control device 8 also obtains a dog engagement prediction speed in this step 15. The dog engagement prediction speed is a relative speed difference between the second dog D2 and the first dog D1 at a timing when the second dog D2 engages with the first dog D1. The predicted dog engagement speed can be expressed, for example, as a relative speed difference between the input shaft 20 and the output shaft 30. The control device 8 uses the power source torque command value set in the above step 13 to calculate the dog engagement prediction speed. It is noted that the control device 8 can also calculate the predicted dog engagement speed at the timing of dog engagement based on, for example, the result of detecting the output torque by the torque detector 19 in the non-transmitting state or the speed of the input shaft 20 and the output shaft 30.

In addition, in this step S15, the control device 8 also obtains a rotation synchronization prediction time. The rotation synchronization prediction time is a time from when the second dog D2 dog engages with the first dog D1 to when the rotation of the power shaft 90 is synchronized with the rotation of the driving wheel. The rotation synchronization prediction time is shown as a time to when the rotational speed change rate of the power shaft 90 become the same as the rotational speed change rate of the driving wheels. The control device 8 uses the dog engagement prediction speed to calculate the rotation synchronization prediction time.

The control device 8 calculates the dog engagement prediction time based on output torque from the engine 11. The dog engagement prediction time is, for example, a time from the timing when the deceleration transmitting state changes to the acceleration state (timing that is determined to be Yes in step 11) to the timing of dog engagement. The control device 8 uses the output torque to calculate the dog engagement prediction time. The dog engagement prediction time changes in accordance with the output torque of the engine 11. The dog engagement prediction time is shorter as the output torque is larger.

When the second dog D2 is not in a non-transmitting state in which the second dog moves away from the first dog D1, the control device 8 obtains a prediction time before the second dog D2 engages with the first dog D1 after a timing of temporarily moving away from the first dog D1.

When the output torque increases from the negative torque to zero, the first dog D1 moves away from the second dog D2. The control device 8 predicts the time when the output torque increases from the negative torque to zero to predict the time to when the first dog D1 moves away from the second dog D2. In addition, the control device 8 predicts a time to when the first dog D1 engages with the second dog D2 arranged at the opposite position after the first dog D1 moves away from the second dog D2. The control device 8 predicts the time to when the dog engages based on the time when the first dog D1 moves away from the second dog D2 and the time to when the first dog D1 moves away from the second dog D2 and engages with the second dog D2 at a position opposite to the second dog D2.

The control device 8 uses torque for driving the first dog D1 and a design value corresponding to the backlash to obtain the dog engagement prediction time.

The obtaining of the dog engagement prediction time (S15) is repeated unless the timing for starting the power reduction process described later arrives (No in S17). Accordingly, the dog engagement prediction time is updated. The details of the obtaining of the dog engagement prediction time will be described later.

When the control device 8 obtains the rotation synchronization prediction time in step 15, the control device 8 predicts the rotation synchronization prediction time using the dog engagement prediction speed and the shift stage.

The rotation synchronization prediction time is used to determine the timing for ending the power reduction process.

The smaller the shift stage is, the longer the rotation synchronization prediction time is. In other words, the rotation synchronization prediction time is longer as the gear ratio of the stepped transmission 13 is larger. The rotation synchronization prediction time can be obtained from parameters including the dog engagement prediction speed and the shift stage, for example, by referring to a map produced based on experiments or simulations. Further, the rotation synchronization prediction time may be calculated based on the dog engagement prediction speed and the shift stage by using, for example, an equation representing a mechanism for absorbing and releasing a shock.

Subsequently, the control device 8 sets a reduction amount of the output torque of the engine 11 (S16) due to the power reduction process (S18). The power reduction process is for reducing the transmission torque transmitted between the first dog D1 and the second dog D2. In the power reduction process, the control device 8 reduces the transmission torque by reducing the output torque output from the engine 11 in a deceleration region. Hereinafter, an example of the reduction of the output torque will be described as the reduction of the transmission torque.

The control device 8 sets the reduction amount of the transmission torque based on the output torque of the engine 11. After the non-transmitting state switches to the acceleration transmitting state by the dog engagement between the first dog D1 and the second dog D2, the angular momentum caused by the inertia of the engine 11 and the output torque of the engine 11 are transmitted through the first dog D1 and the second dog D2. The angular momentum caused by the inertia of the engine 11 is generated when the rotational speed of the input shaft 20 is lowered during the dog engagement. The angular momentum due to inertia of the engine 11 is also referred to as inertia torque in the view of torque. When angular momentum is transmitted, the magnitude of the transmitted torque is primarily affected by the relative speeds of the first dog D1 and the second dog D2 at the timing of the dog engagement. The relative speeds of the first dog D1 and the second dog D2 depend on the output torque of the engine 11 in the non-transmitting state. The reduction amount of the transmission torque is set on the basis of the output torque of the engine 11, and thus, the reduction amount of the transmission torque by the power reduction process is likely to correspond accurately to the period in which the torque is transmitted after the non-transmitting state switches to the acceleration transmitting state.

More specifically, the control device 8 calculates, for example, a value obtained by dividing a speed reduction amount due to dog engagement by (period in which angular momentum due to inertia occurs × inertia of engine 11) to obtain a reduction amount of transmission torque. The period during which angular momentum due to inertia occurs is also referred to as an inertia phase period. The inertia phase period can be obtained, for example, based on the eigenvalue of the torsional vibration of the rotating shaft arranged downstream of the second dog D2. Details of the inertia phase period will be described later.

More specifically, the control device 8 sets the reduction amount of the transmission torque based on the output torque of the engine 11 and the shift stage detected by the shift stage detector. The control device 8 actually sets the reduction amount of the output torque as the reduction amount of the transmission torque. The reduction amount of the output torque by the power reduction process is set to be larger as the output torque of the engine 11 is larger in an acceleration state before the power reduction process. In addition, the smaller the shift stage is, the larger the reduction amount of the output torque is set to be. In other words, the larger the gear ratio is, the larger the amount of power reduction is set to be.

The amount of torque reduction in the power reduction process is calculated, for example, based on a model representing the time response characteristics of the path along which rotation is transmitted from the power shaft 90 to the driving wheels. The amount of reduction of the torque can be obtained, for example, based on the eigenvalue of the torsional vibration of the rotary shaft arranged downstream of the second dog D2. The amount of torque reduction in the power reduction process can be obtained from parameters including the torque and the shift stage before the power reduction process, for example, by referring to a map created based on experiments or simulations.

The control device 8 can also set a torque correction pattern. The torque correction pattern includes a period in which power reduction process is performed, and an amount of change over time of the power of the engine 11 due to the power reduction process in the period. This allows the control device 8 to change the power of the engine 11 over time during the power reduction process. The control device 8 changes the torque correction pattern based on the dog engagement prediction speed.

Subsequently, the control device 8 determines whether the power reduction process starts (S17).

The control device 8 determines the power reduction process starts when the current dog engagement prediction time is shorter than the response time of the engine 11.

When it is determined that the power reduction process starts (Yes in S17), the control device 8 starts the power reduction process (S18). The process for controlling the torque is shifted from the approaching power increase process to the power reduction process.

The response time of the engine 11 is the time from when the control device 8 outputs the command value of the deceleration region to the engine 11 by the start of the power reduction process to when the output torque of the engine 11 is reduced. For example, if the torque reduction is caused by delay in the ignition timing, the torque is not reduced before the ignition timing in the combustion cycle arrives. The response time of the engine 11 corresponds to the time from the output of the command value by the control device 8 to the arrival of the ignition timing. The time from the output of the command value by the control device 8 to the arrival of the ignition timing changes depending on the timing of the output of the command value by the control device 8. In other words, the time before the ignition timing arrives changes according to the passage of time. The control device 8 of the present embodiment continuously calculates the time before the ignition timing arrives as the response time.

The control device 8 starts power reduction process when the dog engagement prediction time is shorter than the response time of the engine 11, so that the output torque of the engine 11 is reduced in accordance with the timing of the dog engagement. With this process, the torque output from the engine 11 is reduced when the state of the dog engaging mechanism with backlash 138 (Figure 3 (A) (B)) switches from the non-transmitting state (See Figure 3(A)) to the acceleration transmitting state (Figure 3 (B)).

The timing for starting the power reduction process is changed based on the output torque of the engine 11, which is a torque-related quantity detected by the torque detector 19. The quantity by which the torque is reduced in the power reduction process is changed in the above step S16 based on the output torque of the engine 11 as the torque-related quantity detected by the torque detector 19 and the shift stage detected by the shift stage detector 55.

Subsequently, the control device 8 determines whether the timing for ending the power reduction process has arrived (S19). The control device 8 continues the power reduction process (S18) until the timing for ending the power reduction process (No in S19). The timing for ending the power reduction process corresponds to a time point after the passage of the inertia phase period from the dog engagement prediction time point.

In power reduction process (S18), the control device 8 outputs a torque command value corresponding to the set reduction amount to the engine 11. More specifically, the control device 8 sets a large value as the power source torque command value out of the set reduction amount or the lower limit value that can be outputted as the power source torque command value. Further, in the power reduction process (S18), for example, the control device 8 can change the power of the engine 11 over time in accordance with the set torque correction pattern.

When the timing for ending the power reduction process has arrived (Yes in S19), the control device 8 returns from the power reduction process (S21). In other words, the control device 8 ends the power reduction process.

The control device 8 ends the power reduction process based on the rotation synchronization prediction time obtained in step S15. More specifically, in step S19, the control device 8 determines that it is the end timing when the rotation synchronization prediction time is smaller than the response time of the engine 11. Thus, the reduction of the output torque of the engine 11 ends in accordance with the timing of the rotation synchronization.

Hereinafter, the control device 8 ends the process of the state change shown in FIG.6.

The timing for ending the power reduction process is controlled based on the shift stage detected by the shift stage detector 55. After the non-transmitting state switches to the acceleration transmitting state by the dog engagement of the first dog D1 and the second dog D2, the momentum caused by the inertia of the engine 11 is transmitted through the first dog D1 and the second dog D2. The period during which momentum is transmitted as transmission torque is the inertia phase period. The inertia phase period is mainly affected by the inertia and damper characteristics of a member downstream from the second dog D2, such as the driving wheel 5, and the torque seen from the driving wheel 5. In addition, the inertia and damper characteristics of the member downstream from the second dog D2 can be regarded as characteristics inherent to the vehicle 1. The timing for ending the power reduction process is controlled on the basis of the shift stage, and thus the period of the power reduction process is likely to accurately correspond to the period transmitted as the transmission torque.

More specifically, the timing for ending the process is changed based on the output torque of the engine 11 detected by the torque detector 19 and the shift stage detected by the shift stage detector 55.

In step S11, if the deceleration transmitting state is not switched to the acceleration state (No in S11), the control device 8 determines whether the acceleration state switches to the deceleration transmitting state (S31).

If the acceleration state switches to the deceleration transmitting state (No in S31), the control device 8 temporarily ends the state change process. As a result, the approaching power increase process (S13) and the approaching power reduction process (S33) are not performed. The power output from the engine simply follows the accelerator operation amount by the process of step S10.

When the acceleration state switches to the deceleration transmitting state (Yes in S31), the control device 8 performs process that is similar to the process of steps S12 to S19 described above (S32 to S39). It is noted that, in steps S32 to S39, the power increase process (S 38) is performed in contrast to steps S12 to S19. The power increase process (S 38) is for increasing the transmission torque transmitted between the first dog D1 and the second dog D2.

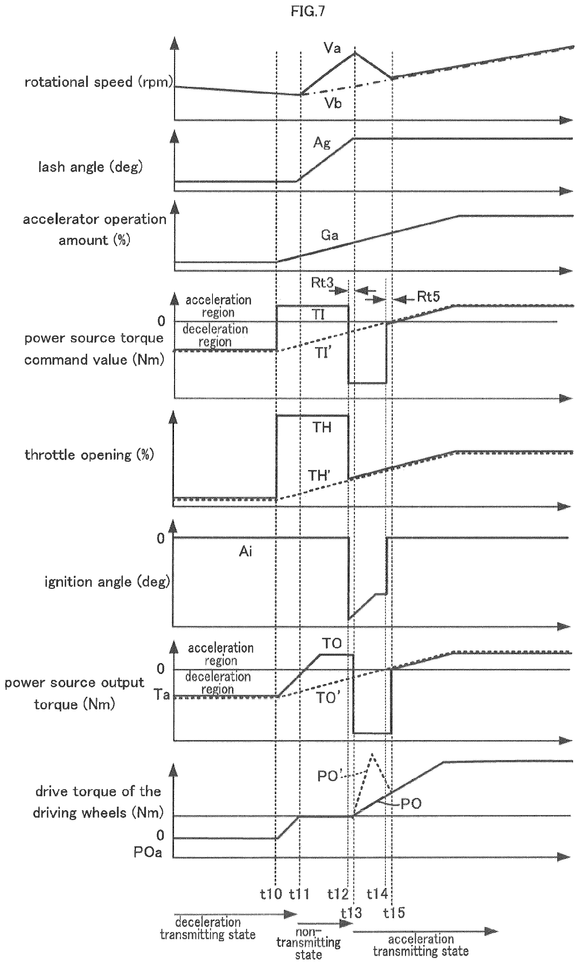

FIG.7 is a time chart showing changes in the rotational speed, the power source torque command value, the power source output torque, and the driving torque of the driving wheels when the deceleration state changes to the acceleration state.

FIG.7 shows a change when the engine 11 of the vehicle 1 changes from a deceleration state to an acceleration state. In other words, FIG.7 shows changes in the case where the power-change-in-acceleration process is performed. The change of the power source output torque T indicates the change of the output torque of the engine 11. FIG.7 shows a power shaft rotational speed Va and a driving wheel rotational speed Vb as rotational speeds. The power shaft rotational speed Va refers to the rotational speed of the power shaft 90 as described in the chart of FIG.4. The driving wheel rotational speed Vb is converted into a value corresponding to the rotational speed of the power shaft 90.

Ag indicates a relative angle between the first dog D1 and the second dog D2. Ga indicates an accelerator operation amount, which is an operation of the accelerator operator. TI is the power source torque command value. TH indicates the opening of the throttle valve 105. Ai indicates the ignition angle. TO indicates the power source output torque. PO indicates the driving torque. The driving wheel 5 substantially drives the vehicle 1. It can be said that the driving torque PO in FIG.7 substantially indicates the drive torque supplied from the output shaft 30 of the stepped transmission 13 to the driving wheels 5.

In the example shown in FIG.7, the engine 11 outputs a negative torque Ta in the deceleration transmitting state. The engine 11 is driven by the torque received from the driving wheels 5. The so-called engine brake is working. The driving torque PO of the driving wheels 5 has a negative value POa before time t11. The first dog D1 and the second dog D2 are engaged to transmit a deceleration force.

At time t10, the accelerator operation amount Ga increases based on, for example, operation by a driver. The control device 8 performs the approaching power increase process (S13 of Figure 6). The approaching power increase process is a process for increasing the power (torque) of the engine 11. The control device 8 increases the power source torque command value TI in the acceleration region in the approaching power increase process. The power source torque command value TI increases stepwise. The control device 8 sets the throttle opening TH and the ignition angle Ai in accordance with the power source torque command value TI.

TI' in FIG. 7 shows, for example, a power source torque command value when the control device 8 does not perform the approaching power increase process. For example, when the approaching power increase process is not performed, the control device 8 increases the power source torque command value TI' corresponding to the accelerator operation amount Ga. In this case, the control device 8 sets the throttle opening TH' corresponding to the accelerator operation amount Ga.

More specifically, the control device 8 sets the corresponding throttle opening TH' in accordance with the ratio of the accelerator operation amount Ga in the operable range.

The control device 8 increases the amount of change of the power source torque command value TI in comparison with the increase amount of the power source torque command value TI' when, for example, the approaching power increase process is not performed. When the approaching power increase process is performed, the amount of change in the power of the engine 11 increases as compared with the amount of change in the power when the approaching power increase process is not performed.

More specifically, the control device 8 outputs a predetermined increase value as the power source torque command value TI in the approaching power increase process.

The control device 8 increases the power source torque command value TI, so that the output torque TO of the power source outputs a torque larger than the torque TO' corresponding to the accelerator operation amount Ga. Accordingly, the first dog D1 moves away from the second dog D2 (non-transmitting state), and moves while accelerating. From time t11 to time t13, the first dog D1 and the second dog D2 are in a non-transmitting state without dog engagement (Figure 3 (A)).

Thereafter, the first dog D1 comes into re-contact with the second dog D2 arranged at a position opposite to the second dog D2 that has been engaged before.

Since the output torque TO of the power source is increased by the approaching power increase process of the control device 8, the period of the non-transmitting state is shortened. In other words, the period from when the first dog D1 moves away from the second dog D2 to when they engage with each other again is shortened. Accordingly, the responsiveness of acceleration is improved.

In the non-transmitting state from time t11 to time t13, the driven gear 32 rotates by the backlash angle Acl as shown in FIG. 3(B). During this period, the drive torque output from the output shaft 30 of the stepped transmission 13 to the driving wheels 5 is zero. In other words, from time t11 to time t13, the engine 11 does not drive the driving wheels 5. Consequently, the increasing rate of the rotational speed Va of the power shaft 90 is emphasized by the approaching power increase process. The driven gear 32 is largely accelerated together with the power shaft 90.

At time t13, the first dog D1 and the second dog D2 are engaged with each other. The non-transmitting state switches to the accelerated transmitting state. The angular momentum of rotation accelerated from time t11 to time t13 in the non-transmitting state of the first dog D1 and the second dog D2 is transmitted from the driven gear 32 to the dog ring 37c (See Figure 3 (C)).

The control device 8 performs the power reduction process (S18 of Figure 6).

The control device 8 starts the power reduction process (S18 of Figure 6) so that the output torque of the engine 11 starts to be reduced at the timing of the dog engagement between the first dog D1 and the second dog D2.

Specifically, the control device 8 starts the power reduction process based on the calculated dog engagement prediction time. More specifically, the control device 8 starts the power reduction process based on the calculated dog engagement prediction time and the response time of the engine 11.

The control device 8 starts the power reduction process at time t12, which is before a response time Rt3 of the engine 11, with respect to a dog engaging time t13. It is noted that the response time of the engine 11 changes depending on the time when the process starts. The response time Rt3 in FIG. 7 is the response time at that time.

From the start of the power reduction process, the output torque of the engine 11 starts to be reduced at time t13, which is after the response time Rt3 of the engine 11. The output torque of the engine 11 starts to be reduced in accordance with the time of the dog engagement.

The control device 8 ends the power reduction process (S18 of Figure 6) so that the reduction of the output torque of the engine 11 ends at a timing when the rotation of the power shaft 90 synchronizes with the rotation of the driving wheels. Then, the power returns from the decrease.

More specifically, the control device 8 ends the power reduction process based on the rotation synchronization prediction time. More specifically, the control device 8 ends the power reduction process based on the calculated rotation synchronization prediction time and the response time of the engine 11.

As a result, the control device 8 ends the power reduction process at time t14, which is before the response time Rt5 of the engine 11 from time t15 at which the power shaft rotational speed Va and the driving wheel rotational speed Vb are synchronized. The response time Rt5 of the engine 11 changes depending on the time when the process ends. The response time Rt5 in FIG. 7 is the response time at that time.

In this way, the control device 8 performs the power reduction process from the time t12 to the time t14 (S18 of Figure 6). This reduces the output torque of the engine 11 from the time t13 to the time t15. TO' in FIG.7 represents, for example, the output torque of the engine 11 when the power reduction process (S18 of Figure 6) is not performed.

Performing the power reduction process (S18 of Figure 6) reduces the output torque TO of the engine 11 from the time t13 to the time t15 more than the output torque TO' when the power reduction process (S18 of Figure 6) is not performed.

As a result, even if the driving torque is increased by the approaching power increase process from the time t10 to the time t13, the change of the driving torque from the stepped transmission 13 to the driving wheels 5 due to the dog engagement between the second dog D2 and the first dog D1 at the time t15 is suppressed.

For example, when the power reduction process is not performed, the angular momentum of the power shaft 90 accelerated from the time t11 to the time t13 by the approaching power increase process and the output torque of the engine 11 are transmitted from the driven gear 32 to the dog ring 37c after the time t13. Specifically, the angular momentum of the power shaft 90 is transmitted through the first dog D1 and the second dog D2. Due to the transmission of the angular momentum and the output torque of the engine 11, a shock by the change of the driving torque as shown by PO' in FIG.7 occurs to the driving wheels 5 and the vehicle 1.

The transmitted angular momentum is due to inertia of the engine 11, and more particularly, for example, the piston 103, the power shaft 90, the clutch 12, the input shaft 20, and inertia of the driven gear 32. On the other hand, the driving wheel 5 receiving the angular momentum also has inertia. In addition, the power transmission path has a damper component that temporarily absorbs changes in transmitted torque. The damper component is shaped, for example, by deformation of the hub damper 5c. Thus, the angular momentum of the power shaft 90 accelerated in the non-transmitting state is transmitted over time from the time t13 to the time t15. The time required for transmitting the angular momentum depends on the time response characteristics of the damper components. In other words, the time required for transmitting the angular momentum depends on the eigenvalue of the torsional vibration of the rotating shaft in the power transmission path.

According to the present embodiment, the output torque of the engine 11 starts to be reduced in accordance with the timing of the dog engagement between the first dog D1 and the second dog D2 (time t13). In other words, the output torque of the engine 11 decreases in accordance with the start of the transmission of the angular momentum of the power shaft 90. Accordingly, even if there is a rotational speed difference between the first dog D1 and the second dog D2 at the dog engaging timing, the angular momentum transmitted toward the driving wheels 5 is suppressed. The transmitted angular momentum is absorbed by, for example, a damper component. Consequently, the change in the driving torque of the driving wheels 5 is suppressed as indicated by PO in FIG.7. In this way, the shock to the vehicle 1 is suppressed by the power reduction process (S18 of Figure 6).

The deceleration transmitting state is shown before time t11 in the time chart in FIG.7. In the deceleration transmitting state, the second dog D2 engages with the first dog D1 to transmit torque from the driving wheels 5 to the engine 11. The engine 11 changes from the deceleration state to the acceleration state at the time t11. The driving torque is increased by the approaching power increase process. This switches the dog engagement state to the non-transmitting state.

As described with reference to the flowchart in FIG.6, the power reduction process of the control device 8 (S18) is performed when the deceleration transmitting state of the engine 11 changes to the acceleration state (Yes in S11). Accordingly, the control device 8 starts the power reduction process (S18) after the time t11 at which the deceleration transmitting state switches to the non-transmitting state. Thus, the time to the dog engagement state is shortened as compared with the case, for example, where the power reduction process starts before the time t11.

In other words, the time to the dog engagement state is shortened by both delaying the time at which the power of the engine 11 starts to be reduced (time t13) and by increasing the driving torque in the approaching power increase process.

In the timing setting process (S15 of Figure 6), the timing for ending the power reduction process is set. The timing for ending the power reduction process is set before the time t15 when the emission of the angular momentum of the driven gear 32 accelerated in the non-transmitting state is completed. Accordingly, after the start of the power reduction process, the control device 8 ends the power reduction process before the time t15 at which the rate of change of the rotational speed Va of the input shaft and the rate of change of the driving wheel rotational speed Vb are synchronized. This suppresses a situation in which the torque due to the angular momentum of the power shaft 90 and the driven gear 32 accelerated in the non-transmitting state of the first dog D1 and the second dog D2 is transmitted, and then the reverse torque by the power reduction process is outputted. Accordingly, the acceleration becomes smoother.

The control device 8 can refer to the timing at which the power shaft rotational speed Va is synchronized with the driving wheel rotational speed Vb as the timing for ending the power reduction process.

The power reduction process of the control device 8 described with reference to FIG. 7 starts the reduction of the output torque of the engine 11 at the time t13 when the second dog D2 is engaged with the first dog D1. Further, the power reduction process of the control device 8 ends the reduction of the output torque of the engine 11 at the time t15 at which the emission of the angular momentum of the driven gear 32 accelerated in the non-transmitting state is completed.

The timing when the output torque of the engine 11 starts the reduction may not match with the time t13 when the second dog D2 engages with the first dog D1. However, the timing when the output torque of the engine 11 starts the reduction is more preferably close to the time t13 when the second dog D2 engages with the first dog D1.

The control device 8 of the present embodiment controls so as to start at least one of the power reduction process and the power increase process from the timing before one cycle of the engine with respect to the switching timing from the non-transmitting state to the acceleration transmitting state or the deceleration transmitting state to the switching timing.

As a result of the power reduction process and the power increase process in the present embodiment, the output torque is controlled by the amount of delay in the ignition timing of the engine. The process starts from the timing before one cycle of the engine with respect to the switching timing to the switching timing, which is likely to change the delay amount of the ignition timing at least before the switching timing or at the ignition timing of the next engine among the ignition timings coming one after another even if the engine is a single cylinder engine. Transmission of torque caused by the rotational speed difference and inertia starts at the switching timing. According to the present embodiment, the output torque of the engine is controlled in accordance with the timing of the transmission of the torque caused by the rotational speed difference and the inertia. The transmission of the torque caused by the rotational speed difference and inertia to driving wheels is suppressed. Thus, the shock to the vehicle 1 is suppressed.

Further, the control device 8 preferably controls starting at least one of the power reduction process and the power increase process from the timing before one combustion period of the engine with respect to the switching timing from the non-transmitting state to the acceleration transmitting state or the deceleration transmitting state to the switching timing. One combustion period of the engine is an interval of combustion occurring in the engine as the engine 11. The one combustion period of the engine is, for example, a period corresponding to one cycle of the engine when the engine as the engine 11 is a single-cylinder engine. When the engine has a plurality of cylinders, one combustion period is a period corresponding to an interval of combustion occurring sequentially in the plurality of cylinders. For example, when the engine 11 is a 4-cylinder engine, the one combustion interval is 1/4 cycles.

The process starts from the timing before one combustion period of the engine with respect to the switching timing to the switching timing, which is likely to change the amount of delay of the ignition timing at least before the switching timing or at the ignition timing of the next engine among the ignition timings coming one after another even if the engine is a multicylinder engine. According to the present embodiment, the output torque of the engine is controlled in accordance with the timing of the transmission of the torque caused by the rotational speed difference and the inertia. The transmission of the torque caused by the rotational speed difference and inertia to driving wheels is suppressed.

In setting the timing of the power reduction process (S15 of Figure 6), the control device 8 of the present embodiment sets the timing for starting the power reduction process in accordance with not the rotational speed of the power shaft 90 but the output torque of the engine 11. More specifically, the control device 8 calculates the dog engagement prediction time based on the output torque from the engine 11. The larger the output torque is, the earlier the timing for starting the power reduction process is set to be.

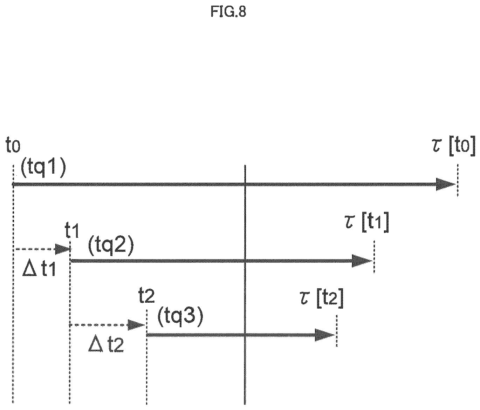

FIG.8 is a time chart for explaining the dog engagement prediction time obtained in the obtaining process for a dog engagement prediction time shown in FIG.6.

In the obtaining process of a dog engagement prediction time (S15 of Figure 6), the control device 8 calculates the dog engagement prediction time based on output torque from the engine 11. For example, the time to the non-transmitting state is calculated using the change speed of the output torque in the process of obtaining the dog engagement prediction time (S15 of Figure 6). The time from the non-transmitting state to the acceleration transmitting state is calculated using the integration of the expected output torque. In the obtaining of the dog engagement prediction time, a predetermined constant is also used in accordance with the size of the dog backlash.

The process for obtaining the dog engagement prediction time of the present embodiment is repeatedly performed until the power reduction process (S18 of Figure 6) is started. FIG.8 shows the calculation in the case where the process for obtaining the dog engagement prediction time is repeated three times. Three times of the process of obtaining the dog engagement prediction time is performed at times t0, t1, and t2.

In the first obtaining process of the dog engagement prediction time at time t0, the control device 8 obtains the dog engagement prediction time τ [t0] based on the output torque tq1. For example, when the output torque tq1 is a negative value, that is, when the non-transmitting state of the dog is not started, the control device 8 calculates the time to when the output torque tq1 becomes 0 based on the output torque tq1 and the time change amount of the output torque. In addition, the control device 8 calculates a time from the start of the non-transmitting state when the output torque tq1 exceeds 0 to the dog engagement. The control device 8 calculates the time to the dog engagement based on the output torque tq1. The sum of the time to when the output torque tq1 becomes 0 and the time from when tq1 exceeds 0 to dog engagement is referred to as dog engagement prediction time τ [t0].

For example, when the relative positions of the dogs D1 and D2 are calculated based on the relative speed of the dogs D1 and D2, neither the relative speed nor the relative position emerges when the non-transmitting state of the dog has not started. In this case, the prediction of the engagement of the dog cannot be substantially started before the non-transmitting state of the dog is started. For example, when the backlash of the dogs D1 and D2 is small, the time from the start of the non-transmitting state of the dog to the dog engagement is short. In this case, if the dog engagement is predicted after the start of the non-transmitting state of the dog, the prediction of the dog engagement may not be in time with the actual dog engagement.

On the other hand, in the present embodiment, since the engagement prediction time is calculated based on the output torque, a rough indication of the engagement prediction time can be obtained before the start of the non-transmitting state of the dog. Accordingly, even when the backlash of the dogs D1 and D2 is small, the output of the engine 11 can be controlled in accordance with the timing of the dog engagement.

The output torque and the relative speed of the dogs D1 and D2 may change over time. The control device 8 corrects the dog engagement prediction time while repeatedly performing the obtaining process of the dog engagement prediction time until the power reduction process (S18) is started.

In the second obtaining process of the dog engagement prediction time at time t1, the control device 8 obtains the updated dog engagement prediction time τ [t1] based on the output torque tq2 at time t1.

First, in the calculation of the dog engagement prediction time τ [t1], the elapsed time Δt1 after the previous obtaining process is subtracted from the dog engagement prediction time τ [t0] calculated in the previous obtaining process. Next, for example, the dog engagement prediction time is corrected in accordance with a change between the output torque tq2 at the present time t1 and the output torque tq1 at the previous time t0. Thus, the dog engagement prediction time τ [t1] at time t1 is obtained.

In the process of obtaining the third dog engagement prediction time at time t2, the control device 8 obtains the updated dog engagement prediction time τ [t2] based on the output torque tq3 at time t2 in the same way as the second process.

After the non-transmitting state of the dog starts in the obtaining of the dog engagement prediction time, for example, the relative speeds of the dogs D1 and D2 may be detected, and the dog engagement prediction time may be corrected using the relative speeds.

In FIG. 8, τ [tt] indicates an actual dog engagement timing. Generally, the dog engagement prediction times τ [t0], τ [t1], τ [t2] ... calculated in the process of obtaining the dog engagement prediction time more accurately represent the time τ [tt], which is time to the actual dog engagement timing, as each time the process is repeated.

The control device 8 controls the start timing t12 of power reduction process based on the torque of the power source. Accordingly, the timing of the reduction of the output torque by the power reduction process is precisely matched with the time t13, which is the timing of the dog engagement. Thus, even if the angular momentum supplied from the power source is suppressed after the switching timing to the acceleration transmitting state, the shock to the vehicle is suppressed.

The control device 8 does not need to reduce the power for a long period of time prior to the dog engagement to reduce the shock to the vehicle. Accordingly, the time in the non-transmitting state is shortened, and the responsiveness of acceleration is improved.

In this way, the control device 8 of the present embodiment can reduce the output torque in accordance with the switching to the non-transmitting state by obtaining the precise timing of the switching to the non-transmitting state. Further, the control device 8 obtains a predicted speed with which the two dogs D2 and D1 come into contact at the timing of dog engagement (S15). The control device 8 sets an amount by which the output torque of the power source 11 is reduced in power reduction process (S18) based on the predicted speed and the shift stage (S16). Thus, the transmission of the torque caused by the rotational speed difference and the inertia to the driving wheels is suppressed.

The control device 8 of the present embodiment further starts the power reduction process in consideration of the response time of the output of the engine 11 as the power source. In step S17 of FIG.6, the control device 8 determines in consideration of the response time of the output of the engine 11.

Specifically, the control device 8 of the present embodiment does not start the power reduction process when the dog engagement prediction time τ calculated in the process of obtaining the dog engagement prediction time becomes zero, but starts the power reduction process before the calculated dog engagement prediction time τ becomes zero.

More specifically, the control device 8 starts the power reduction process in accordance with the result of comparing the calculated dog engagement prediction time with the response time of the output of the engine 11. More specifically, the control device 8 starts the power reduction process when the calculated dog engagement prediction time is less than the response time of the output of the engine 11.

As described above, the response time of the engine 11 corresponds to the time from the output of the command value by the control device 8 to the arrival of the ignition timing. The time from the output of the command value by the control device 8 to the arrival of the ignition timing changes depending on the timing of the output of the command value by the control device 8. In other words, the response time of the engine 11 changes with the rotation of the power shaft 90.

The control device 8 of the present embodiment obtains the response time of the engine 11 which changes with the rotation of the power shaft 90, and starts the power reduction process in accordance with the result of comparing the calculated dog engagement prediction time with the response time of the output of the engine 11.

The method for obtaining the dog engagement prediction time is not limited to calculation. The dog engagement prediction time can also be obtained, for example, by referring to a map created based on experiments or simulations.

As described above, it has been described that power reduction process is performed when the deceleration state changes to the acceleration state. The control device 8 of the present embodiment performs power increase process when the engine 11 changes from the acceleration state to the deceleration state. The change in the direction of the torque and the change in the rotational speed when the power increase process is performed is opposite to that of in the power reduction process. The remaining process including the process for calculating the timing is the same as the power reduction process.

In steps S32 to S39 of FIG.6, the power increase process (S38), which is contrary to steps S12 to S19, is performed.

Specifically, the control device 8 detects the shift stage being currently selected by the stepped transmission 13 (S32).

Subsequently, the control device 8 performs an approaching power reduction process (S33). The control device 8 reduces the output torque from the engine 11 so as to speed up the approach of the first dog D1 to the second dog D2 in a non-transmitting state. The control device 8 sets, for example, a small value as the power source torque command value out of a predetermined reduction value or a command value corresponding to the accelerator operation amount. The command value is a predetermined value as a target for speeding up the approach of the first dog D1 to the second dog D2. Thus, a value equal to or smaller than the reduction value is set as the power source torque command value. As a result, the output torque from the engine 11 is reduced.

When the approaching power reduction process (S33) is performed, the control device 8 increases the amount of change in the power of the power source with respect to the accelerator operation amount as compared with the amount of change when neither the approaching power increase process (S13) nor the approaching power reduction process (S33) is performed.

In the approaching power reduction process, a predetermined reduction value is outputted as a power source torque command value, so that the power source torque command value decreases stepwise. As a result, the output torque from the engine 11 rapidly decreases.

Subsequently, the control device 8 sets the process timing (S35). The control device 8 sets the timing for starting and the timing for ending power increase process. Specifically, the control device 8 obtains a dog engagement prediction time.

The smaller the torque in the approaching power reduction process is, the shorter the period before the timing for starting the power increase process is set to be. The control device 8 obtains a dog engagement prediction time based on the torque of the engine 11. The smaller the shift stage is, the longer the timing for ending the power increase process is set to be. In other words, the larger the gear ratio of the stepped transmission 13 is, the longer the timing for ending the power increase process is set to be. The larger the torque is, the longer the timing for ending the power increase process is set to be. Subsequently, the control device 8 sets an increase amount of the output torque of the engine 11 by the power increase process (S36).

When it is determined to be the timing for starting the power increase process (Yes in S37), the control device 8 starts the power increase process (S38). The output torque of the engine 11 increases in accordance with the timing of dog engagement.

When the timing for ending the power increase process arrives (Yes in S39), the control device 8 returns from the power increase process (S41). In other words, the control device 8 ends the power increase process. The increase of the output torque of the engine 11 ends in accordance with the timing of rotation synchronization.

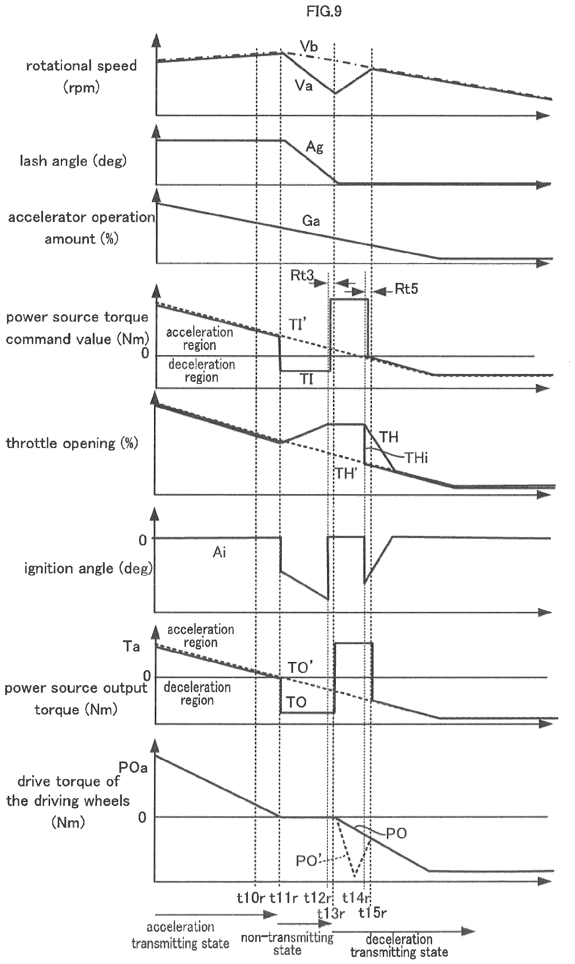

FIG.9 is a time chart showing changes in the rotational speed, the power source torque command value, the power source output torque, and the drive torque of the driving wheels when the acceleration state changes to the deceleration state.

In the example shown in FIG.9, the engine 11 outputs a positive torque Ta in the acceleration transmitting state. The engine 11 drives the driving wheel 5. The driving torque PO of the driving wheel 5 has a positive value POa before the time t11r.

For example, when the accelerator operation amount Ga is reduced based on the operation of the driver, the control device 8 performs the approaching power reduction process (S33 of Figure 6). The approaching power reduction process is for reducing the power (torque) of the engine 11. The control device 8 reduces the power source torque command value TI in the approaching power reduction process. The power source torque command value TI decreases stepwise. The control device 8 sets the throttle opening TH and the ignition angle Ai in accordance with the power source torque command value TI. The throttle opening THi is a command value of the throttle opening, and TH represents the actual throttle opening.

TI' in FIG.9 shows, for example, a power source torque command value when the control device 8 does not perform the approaching power reduction process. When the approaching power reduction process is not performed, the control device 8 reduces the power source torque command value TI' corresponding to the accelerator operation amount Ga. In this case, the control device 8 sets the throttle opening TH' corresponding to the accelerator operation amount Ga. More specifically, the control device 8 sets the corresponding throttle opening TH' in accordance with the ratio of the accelerator operation amount Ga in the operable range.

The control device 8 reduces the amount of change of the power source torque command value TI in comparison with the amount of decrease of the power source torque command value TI' when the approaching power reduction process is not performed. By performing the approaching power reduction process, the control device 8 reduces the amount of change in the power of the engine 11 as compared with the amount of change in the power when the approaching power reduction process is not performed.

The control device 8 reduces the power source torque command value TI and thus, the output torque TO of the power source outputs a torque smaller than the torque TO' corresponding to the accelerator operation amount Ga. The output torque TO of the power source becomes negative. Accordingly, the first dog D1 moves away from the second dog D2 (non-transmitting state) while decelerating. From time t11 to time t13, the first dog D1 and the second dog D2 are in a non-transmitting state without dog engagement (Figure 3 (A)).

Thereafter, the first dog D1 comes into re-contact with the second dog D2 arranged at a position opposite to the second dog D2 engaged before.

Since the output torque TO of the power source is reduced by the approaching power reduction process of the control device 8, the period of the non-transmitting state is shortened. In other words, the period from when the first dog D1 moves away from the second dog D2 to when they engage with each other again is shortened.

Accordingly, the responsiveness of acceleration is improved.

In the non-transmitting state from time t11r to time t13r, the drive torque output from the output shaft 30 of the stepped transmission 13 to the driving wheel 5 is zero. In other words, from time t11r to time t13r, the engine 11 does not drive the driving wheels 5. Consequently, the decreasing rate of the rotational speed Va of the power shaft 90 is emphasized by the approaching power reduction process.

From time t11r to time t13r, the control device 8 prepares for the next increase in driving force. In other words, the control device 8 gradually increases the throttle opening TH. Further, the control device 8 increases the retard amount of the ignition angle Ai as the throttle opening TH increases.

At time t13r, the first dog D1 and the second dog D2 are engaged with each other. The non-transmitting state switches to the deceleration transmitting state. The angular momentum of the rotation decelerated from time t11r to time t13r in the non-transmitting state of the first dog D1 and the second dog D2 is transmitted from the driven gear 32 to the dog ring 37c (See Figure 3 (C)).

The control device 8 performs power increase process (S38 of Figure 6).

The control device 8 starts power increase process (S38 of Figure 6) so that the increase of the output torque of the engine 11 starts at the timing of dog engagement between the first dog D1 and the second dog D2.

Specifically, the control device 8 starts the power increase process based on the calculated dog engagement prediction time. More specifically, the control device 8 starts the power increase process based on the calculated dog engagement prediction time and the response time of the engine 11.

As a result, the control device 8 starts the power increase process at a time t12r, which is before the response time Rt3 of the engine 11 from the dog engaging time t13r. It is noted that the response time of the engine 11 changes depending on the time when the process starts.

From the start of the power increase process, at time t13r after the response time Rt3 of the engine 11 has passed, the output torque of the engine 11 starts to increase. The output torque of the engine 11 starts to increase in accordance with the time of dog engagement.

The control device 8 ends the power increase process (S38 of Figure 6) so that the increase of the output torque of the engine 11 ends at a timing at which the rotation of the power shaft 90 synchronizes with the rotation of the driving wheels.

More specifically, the control device 8 ends the power increase process based on the rotation synchronization prediction time. More specifically, the control device 8 ends the power increase process based on the calculated rotation synchronization prediction time and the response time of the engine 11.

As a result, the control device 8 ends the power increase process at time t14r, which is before the response time Rt5 of the engine 11 from time t15r at which the power shaft rotational speed Va and the driving wheel rotational speed Vb are synchronized. The response time Rt5 of the engine 11 changes depending on the time at which the process ends.

In this way, the control device 8 performs the power increase process (S38 of Figure 6) from the time t12r to the time t14r. As a result, from time t13r to time t15r, the torque from the engine 11 increases. TO' in FIG.7 represents, for example, the output torque of the engine 11 when the power increase process (S38 of Figure 6) is not performed. The power increase process is performed, which increases the output torque of the engine 11 more than when the power increase process is not performed.

As a result, even if the driving torque is reduced by the approaching power reduction process from time t11r to time t13r, the change of the driving torque from the stepped transmission 13 to the driving wheel 5 due to the dog engagement between the second dog D2 and the first dog D1 is suppressed at time t15r.

According to the present embodiment, the output torque of the engine 11 starts to increase in accordance with the timing of the dog engagement between the first dog D1 and the second dog D2 (time t13r). In other words, the torque of the engine 11 increases in accordance with the start of the transmission of the angular momentum of the power shaft 90 (angular momentum of deceleration). Accordingly, even if there is a rotational speed difference between the first dog D1 and the second dog D2 at the dog engaging timing, the angular momentum of deceleration transmitted toward the driving wheel 5 is suppressed. The transmitted angular momentum is absorbed by, for example, a damper component. Thus, the change in the driving torque of the driving wheel 5 is suppressed as indicated by PO in FIG.9. In this way, the shock to the vehicle 1 is suppressed by the power increase process (S38 of Figure 6).

According to the present embodiment, the time to the state of the dog engagement is shortened both by delaying the time at which the power increase of the engine 11 starts (time t13r) and by reducing the driving torque by the approaching power reduction process.

### [Second embodiment]

Next, a second embodiment of the present invention will be described.

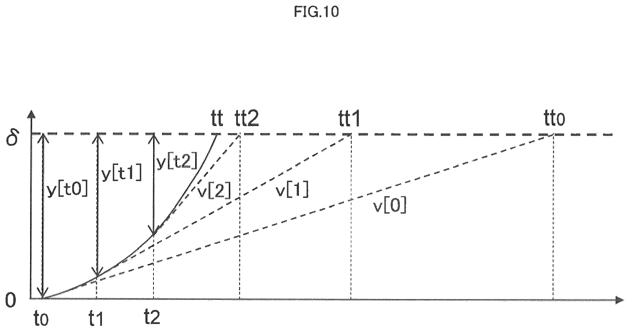

FIG. 10 is a time chart for explaining the prediction of dog engagement of the vehicle according to the second embodiment.

The control device 8 of the second embodiment uses the input shaft speed detector 27 to obtain the relative rotational gap of the first dog D1 and the second dog D2. The control device 8 controls timing for starting at least one of power reduction process and power increase process based on the relative rotational gap.

More specifically, the control device 8 obtains the rotational speed of the input shaft 20 from the input shaft speed detector 27. The control device 8 obtains the relative rotational gap of the first dog D1 and the second dog D2 in the obtaining process (S15 of Figure6) of the dog engagement prediction time.

For example, the control device 8 calculates the rotational speed of the first dog D1 based on the rotational speed of the input shaft 20 obtained from the input shaft speed detector 27. The control device 8 calculates the rotational speed of the second dog D2 based on the rotational speed of the input shaft 20 before switching to the acceleration state. The control device 8 also calculates the relative rotational speed. The rotational position is calculated, for example, by integrating the rotational speed. The control device 8 calculates a relative rotational gap from the rotation positions of the first dog D1 and the second dog D2. By obtaining the relative rotational gap from the rotational speed and controlling the timing for starting the process based on the relative rotational gap, the start of the process can be controlled by a simple calculation. The rotational speed of the second dog D2 may be obtained, for example, by using another speed detector provided on the output shaft 30.

The horizontal axis of FIG.10 indicates the timing at which the detection and dog engagement events occur. FIG. 10 shows a dog engagement prediction when the obtaining of the relative rotational gap is performed three times repeatedly. Three times of the process of obtaining the dog engagement prediction time is performed at times t0, t1, and t2.

The vertical axis of FIG. 10 indicates the relative rotational gap. The relative rotational gap increases from zero with relative movement. The relative rotational gap δ indicates the position of the dog engagement. The distances to dog engagement are represented by y[t], y[t1] and y[t2].

The solid line in FIG.10 shows an example of an actual relative position that changes over time.

The relative rotational gap obtained based on the detection at time t0 is 0. Before time t0, the relative movement of the first dog D1 and the second dog D2 has not started. The distance to the dog engagement y[t0] is equal to a distance corresponding to backlash δ. The relative movement starts at time t0. The relative rotational speed detected at time t0 is v[0]. For example, when the timing of the dog engagement is predicted based on the relative rotational speed v[0] at time t0, the predicted timing of the dog engagement is tt0.

The relative rotational speed detected at time t1 is v[1]. The distance to the dog engagement obtained based on the relative rotational speed is y[t1]. For example, when the timing of the dog engagement is predicted based on the relative rotational speed v[1] at time t01, the predicted timing of the dog engagement is tt1.

The distance to the dog engagement obtained based on the detection at time t2 is y[t2]. For example, when the timing of the dog engagement is predicted based on the relative rotational speed v[2] at time t2, the predicted timing of the dog engagement is tt2.

As time passes, the distance to dog engagement decreases. When the difference between the obtained relative rotational gap and δ corresponding to the backlash falls below a predetermined reference value, the control device 8 assumes that start timing for the process has arrived (Yes in S17 in Figure 6), and starts the power reduction process (S18 of Figure 6).

The above process is also applied to process related to power increase process (S38 of Figure 6).

The remaining process and configuration in the present embodiment are the same as those in the first embodiment.

### [Third embodiment]

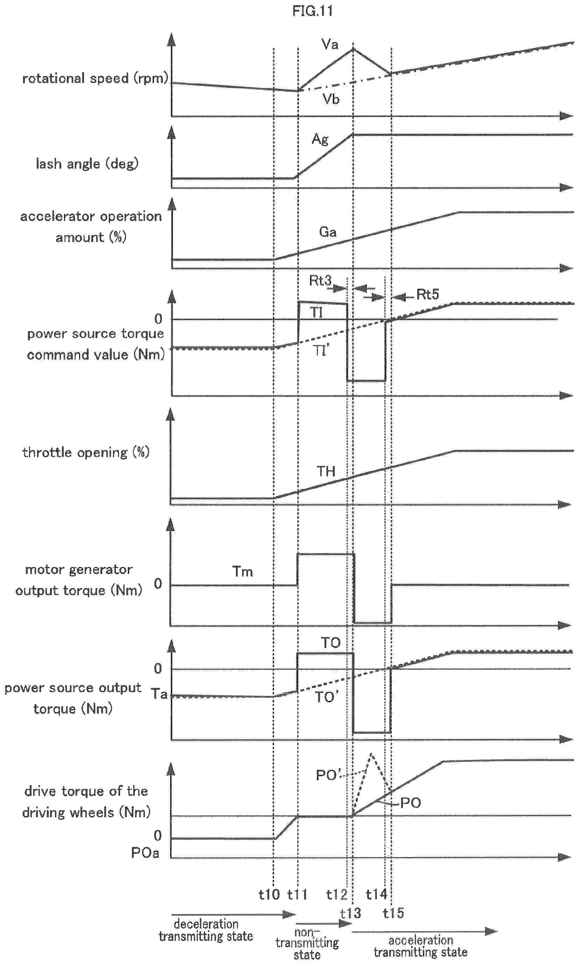

Next, a third embodiment of the present invention will be described. FIG.11 is a time chart showing changes in the rotational speed of the vehicle, the power source torque command value, the power source output torque, and the drive torque of the driving wheels when the deceleration state of the vehicle according to the third embodiment changes to the acceleration state.

The control device 8 of the vehicle 1 according to the third embodiment performs the power-change-in-acceleration process and the power-change-in-deceleration process by controlling the torque output from the motor generator 41. The combination of engine 11 and motor generator 41 functions as a power source. The control device 8 simply changes the power source torque command value TI' corresponding to the accelerator operation amount Ga. More specifically, the control device 8 sets the corresponding throttle opening TH' in accordance with the ratio of the accelerator operation amount Ga in the operable range.

Since the remaining points in the present embodiment are the same as those in the first and second embodiments, the drawings referred to in the first embodiment will be used for description.

The power-change-in-acceleration process will be described. The control device 8 increases the rotational speed of the power shaft 90 by driving the motor generator 41 with electric power in the approaching power increase process (S13 of Figure 6). At this time, the control device 8 controls the motor generator 41 so that the motor generator 41 outputs torque in the rotational direction. As shown in FIG.11, from time t11 to time t13, motor generator 41 outputs positive torque, that is, torque in the rotational direction. Thus, the approach of the first dog D1 to the second dog D2 accelerates.

The control device 8 causes the motor generator 41 to generate power in power reduction process (S18 of Figure 6), which reduces the rotational speed of the power shaft 90. As shown in FIG. 11, from time t13 to time t15, motor generator 41 outputs a negative torque. Thus, the transmission torque transmitted between the first dog D1 and the second dog D2 is reduced.

According to the present embodiment, the approaching power increase process and the power reduction process are performed without controlling the throttle opening TH or the ignition angle Ai of the engine 11. Accordingly, the responsiveness of the power source including the motor generator 41 is improved.

Next, the power-change-in-deceleration process will be described.

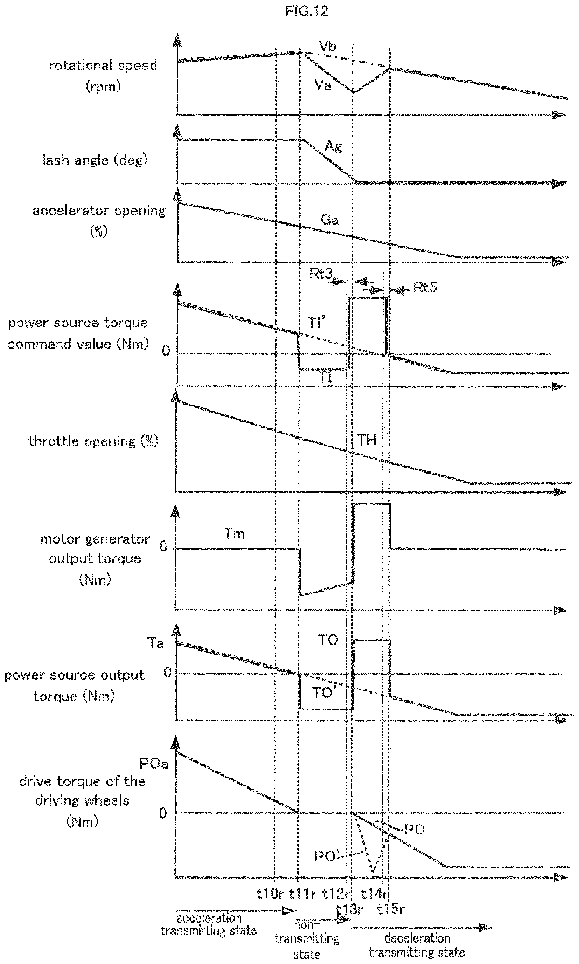

FIG.12 is a time chart showing changes in the rotational speed of the vehicle, the power source torque command value, the power source output torque, and the drive torque of the driving wheels when the acceleration state of the vehicle according to the third embodiment changes to the deceleration state.

The control device 8 causes the motor generator 41 to generate power in the approaching power reduction process (S33 of Figure 6), thereby reducing the rotational speed of the power shaft 90. At this time, the control device 8 controls the motor generator 41 so that the motor generator 41 outputs the torque opposite to the rotational direction. As shown in FIG.12, from time t11r to time t13r, motor generator 41 outputs a negative torque, that is, a torque opposite to the rotational direction. Thus, the approach of the first dog D1 to the second dog D2 accelerates.

The control device 8 increases the rotational speed of the power shaft 90 by driving the motor generator 41 with electric power in power increase process (S38 of Figure 6). As shown in FIG.12, from time t13r to time t15r, motor generator 41 outputs a positive torque. Thus, the transmission torque transmitted between the first dog D1 and the second dog D2 increases.

According to the present embodiment, the approaching power increase process and the power reduction process can be performed without controlling the throttle opening TH or the ignition angle Ai of the engine 11. Consequently, the responsiveness of the power source including the motor generator 41 is improved.

### [Fourth embodiment]

Next, a fourth embodiment of the present invention will be described.

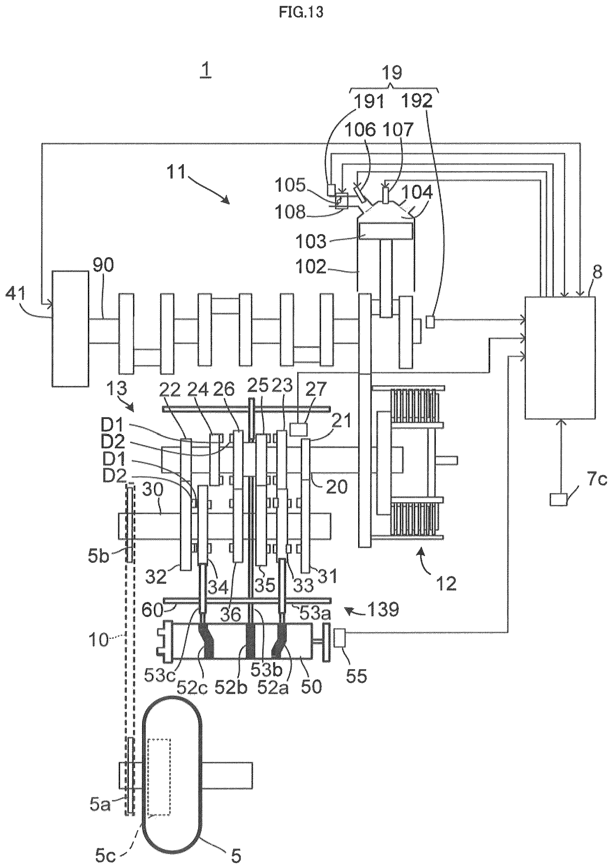

FIG.13 is for explaining a schematic configuration of the vehicle according to the fourth embodiment.

The vehicle of the fourth embodiment has a stepped transmission that is different from the first to the third embodiments. Other things in the fourth embodiment are common to the first to the third embodiments. Therefore, in the description of the fourth embodiment, the drawings of the first embodiment are also used, and the same reference numerals as those of the first embodiment are used.

The vehicle 1 of the fourth embodiment has the stepped transmission 13 in which a part of a plurality of drive gears (21 to 26) are disengaged. It is noted that, in the stepped transmission 13 of the present embodiment, as in the first embodiment, at least one of the plurality of driven gears (31 to 36) is continuously engaged with the drive gear (21 to 26). The stepped transmission 13 in the present embodiment does not have a dog ring as shown in FIG.1. The first dog D1 and the second dog D2 are provided only on either a driven gear (31 to 36) or a driven gear (31 to 36).

Among the drive gears (21 to 26), the fifth speed drive gear 25 and the sixth speed drive gear 26 are movable in the axial direction of the input shaft 20. The fifth speed drive gear 25 and the sixth speed drive gear 26 move integrally with the shift fork 53b in the axial direction.

In addition, the third driven gear 33 and the fourth driven gear 34 of the driven gears (31 to 36) are movable in the axial direction of the input shaft 20. For example, when the fourth driven gear 34 moves, the first dog D1 provided in the fourth driven gear 34 and the second dog D2 provided in the adjacent second driven gear 32 are engaged with each other. In other words, the fourth driven gear 34 and the second driven gear 32 are engaged with each other. Thus, the power is transmitted from the input shaft 20 through the second speed drive gear 22, the second speed driven gear 32, and the fourth speed driven gear 34 to the output shaft 30. At this time, the fourth speed driven gear 34 and the second speed drive gear 22 are disengaged.

Also in the present embodiment, the first dog D1 and the second dog D2 are engaged with each other with backlash. Accordingly, the control device 8 of the present embodiment performs the power-change-in-acceleration process and the power-change-in-deceleration process. Also in the present embodiment, the shock due to the change of the driving torque caused by the angular momentum of, for example, the driven gear and the driven gear accelerated or decelerated in the non-transmitting state is suppressed by the power increase process or the power reduction process.

### Reference signs list

- 1: vehicle
- 5: driving wheel (driving member)
- 8: control device
- 11: engine (power source)
- 12: clutch
- 13: stepped transmission
- 19: torque detector
- 20: input shaft
- 21to26: drive gear
- 30: output shaft
- 31to36: driven gear
- 37ato37c: dog ring
- 41: motor generator
- 55: gearshift detector
- 90: power shaft
- 138: dog engaging mechanism with backlash
- 139: transmission stage setting mechanism
- 191: throttle opening detector
- 192: power shaft speed detector
- D1: first dog (first transmission member)
- D2: second dog (second transmission member)

## Claims

1. A vehicle (1) comprising:
a driving member (5) configured to drive the vehicle (1);
a power source (11) configured to operate in a region including an acceleration region in which the power source (11) outputs power toward the driving member (5), and a deceleration region in which the power source (11) is powered by the driving member (5);
a first transmission member (D1) and a second transmission member (D2) that are provided in a power transmission path from the power source (11) to the driving member (5) so as to have backlash therebetween and be relatively rotatable to each other, and are configured for power transmission by being engaged with each other;
an accelerator operator (7b) configured to be operated by the driver of the vehicle (1) to demand a power output from the power source (11); and
a control device (8) configured to perform at least one of a power-change-in-acceleration process and a power-change-in-deceleration process, the power-change-in-acceleration process being for changing the power of the power source (11) when a non-transmitting state switches to an acceleration transmitting state, the power-change-in-deceleration process being for changing the power of the power source (11) when the non-transmitting state switches to a deceleration transmitting state, the non-transmitting state being when the first transmission member (D1) moves away from the second transmission member (D2) in the circumferential direction and power is not transmitted, the acceleration transmitting state being when power is transmitted in the acceleration direction by engagement in which the second transmission member (D2) comes into contact with the first transmission member (D 1) in the circumferential direction, the deceleration transmitting state being when power is transmitted in the deceleration direction by the engagement, wherein
the power-change-in-acceleration process includes an approaching power increase process and a power reduction process, the approaching power increase process being for increasing the power of the power source (11) in the acceleration region so as to accelerate the approach of the first transmission member (D 1) to the second transmission member (D2) in the non-transmitting state, the power reduction process being for reducing the power of the power source (11) so as to reduce the transmission torque transmitted between the first transmission member (D 1) and the second transmission member (D2) after the approaching power increase process, wherein
the power-change-in-deceleration process includes an approaching power reduction process and a power increase process, the approaching power reduction process being for reducing the power of the power source (11) to the deceleration region so as to accelerate the approaching of the first transmission member (D1) and the second transmission member (D2) in the non-transmitting state, the power increase process being for increasing the power of the power source (11) so as to increase the transmission torque transmitted between the first transmission member (D 1) and the second transmission member (D2) after the approaching power increase process, wherein
the control device (8) is configured to control so that:
in the power-change-in-acceleration process, the timing for starting the power reduction process after the approaching power increase process is set at the same time as or before a switching timing from the non-transmitting state to the acceleration transmitting state, and the timing for ending the power reduction process is set after the switching timing, and,
in the power-change-in-deceleration process, the timing for starting the power increase process after the approaching power reduction process is set at the same time as or before a switching timing from the non-transmitting state to the deceleration transmitting state, and the timing for ending the power increase process is set after the switching timing,
wherein the control device (8) is configured to increase a change amount of the power outputted by the power source (11) relative to an amount of operation of the accelerator operator (7b) when at least one of the approaching power increase process and the approaching power reduction process is performed, as compared with a change amount of the power outputted when neither the approaching power increase process nor the approaching power reduction process is performed.

2. The vehicle (1) according to claim 1,
wherein the control device (8) is configured to change a command value of power to be outputted by the power source (11) in a stepwise manner when performing at least one of the approaching power increase process and the approaching power reduction process.

3. The vehicle (1) according to any one of claims 1 and 2, further comprising
a torque detector (19) configured to detect a torque-related amount related to the transmission torque, wherein
the control device (8) is configured to perform at least one of the following two processes: the one process being for controlling at least one of an amount for reducing the transmission torque in the power reduction process and a timing for starting the at least one process based on the torque-related amount detected by the torque detector (19) in the power reduction process, the other process being for controlling at least one of an amount for increasing the transmission torque in the power increase process and a timing for starting the at least one process based on the torque-related amount detected by the torque detector (19) in the power increase process.

4. The vehicle (1) according to claim 3, wherein
the control device (8) is configured to calculate the time frame until the timing of the engagement between the first transmission member (D1) and the second transmission member (D2) in the circumferential direction based on the torque-related amount detected by the torque detector (19), and to determine the timing for starting the at least one process based on the calculated time frame until the timing of the engagement.

5. The vehicle (1) according to any one of claims 1 to 4, wherein
the control device (8) is configured to obtain a relative rotational gap of the first transmission member (D1) and the second transmission member (D2), and to control a timing for starting the at least one process based on the relative rotational gap.

6. The vehicle (1) according to claim 5, the vehicle (1) comprising:
a rotational speed detecting unit (27) configured to detect information relating to the rotational speed of either only a power input shaft (20) or both the power input shaft (20) and a power output shaft (30), the power input shaft (20) and the power output shaft (30) relating to the first transmission member (D1) and the second transmission member (D2), wherein
the control device (8) is configured to obtain the relative rotational gap by calculation of the relative rotational gap based on the information on the rotational speed of the power input shaft (20).

7. The vehicle (1) according to any one of claims 1 to 6, comprising
a stepped transmission (13), the stepped transmission (13) including:
an input shaft (20) rotatably disposed, into which power is inputted;
an output shaft (30) rotatably disposed on an axis parallel to the input shaft (20);
a plurality of drive gears (21 - 26) provided on the input shaft (20) and configured to continuously rotate together with the input shaft (20) or to be relatively rotatable with the input shaft (20), each of which corresponds to each shift stage;
a plurality of driven gears (31 - 36) provided on the output shaft (30) and configured to continuously rotate together with the output shaft (30) or to be relatively rotatable with the output shaft (30), and configured to be engageable with a corresponding drive gear (21 - 26), wherein at least one of the plurality of driven gears (31 - 36) is continuously engaged with the drive gear (21 - 26); and,
a shift stage setting mechanism (139) configured to mechanically and selectively set the power transmission to be effective from the input shaft (20) to the output shaft (30) via the drive gear (21 - 26) and the driven gear (31 - 36) relating to any one of the shift stages, wherein
the shift stage setting mechanism (139) includes a mechanism (138) for dog engagement with backlash, the mechanism (138) including a first dog (D1) serving as the first transmission member (D1) provided in either the drive gear (21 - 26) or the driven gear (31 - 36), and a second dog (D2) serving as the second transmission member (D2) which comes into contact with the first dog (D1) with the backlash in the circumferential direction in the each shift stage, the dog engagement established as a result of the dog engagement in which the first dog (D1) comes into contact with the second dog (D2) in the circumferential direction selecting, as being effective, power transmitted to the drive gear (21 - 26) via the input shaft (20) or power transmitted from the driven gear (31- 36) to the output shaft (30), wherein
the power source (11) outputs power for supplying to the input shaft (20) of the stepped transmission (13).

## Patentansprüche

1. Ein Fahrzeug (1), das folgende Merkmale aufweist:
ein Antriebsbauglied (5), das dazu konfiguriert ist, das Fahrzeug (1) anzutreiben;
eine Leistungsquelle (11), die dazu konfiguriert ist, in einem Bereich zu arbeiten, der einen Beschleunigungsbereich, in dem die Leistungsquelle (11) eine Leistung hin zu dem Antriebsbauglied (5) ausgibt, und einen Verlangsamungsbereich umfasst, in dem die Leistungsquelle (11) durch das Antriebsbauglied (5) mit Leistung versorgt wird;
ein erstes Übertragungsbauglied (D1) und ein zweites Übertragungsbauglied (D2), die in einem Leistungsübertragungspfad von der Leistungsquelle (11) zu dem Antriebsbauglied (5) bereitgestellt sind, so dass ein Spiel dazwischen vorhanden ist und dieselben relativ zueinander drehbar sind, und die zur Leistungsübertragung konfiguriert sind, indem dieselben miteinander in Eingriff treten;
eine Beschleuniger-Bedieneinrichtung (7b), die dazu konfiguriert ist, durch den Fahrer des Fahrzeugs (1) betätigt zu werden, um eine Leistungsausgabe von der Leistungsquelle (11) anzufordern; und
eine Steuervorrichtung (8), die dazu konfiguriert ist, einen Leistungsänderung-bei-Beschleunigung-Prozess und/oder einen Leistungsänderung-bei-Verlangsamung-Prozess auszuführen, wobei der Leistungsänderung-bei-Beschleunigung-Prozess zum Ändern der Leistung der Leistungsquelle (11) dient, wenn ein Nichtübertragungszustand zu einem Beschleunigungsübertragungszustand wechselt, wobei der Leistungsänderung-bei-Verlangsamung-Prozess zum Ändern der Leistung der Leistungsquelle (11) dient, wenn der Nichtübertragungszustand zu einem Verlangsamungsübertragungszustand wechselt, wobei der Nichtübertragungszustand stattfindet, wenn sich das erste Übertragungsbauglied (D1) in der Umfangsrichtung weg von dem zweiten Übertragungsbauglied (D2) bewegt und keine Leistung übertragen wird, wobei der Beschleunigungsübertragungszustand stattfindet, wenn Leistung in der Beschleunigungsrichtung übertragen wird durch Ineingriffnahme, bei der das zweite Übertragungsbauglied (D2) in der Umfangsrichtung in Kontakt mit dem ersten Übertragungsbauglied (D1) tritt, wobei der Verlangsamungsübertragungszustand stattfindet, wenn Leistung in der Verlangsamungsrichtung durch die Ineingriffnahme übertragen wird, wobei
der Leistungsänderung-bei-Beschleunigung-Prozess einen Annäherungsleistungserhöhungsprozess und einen Leistungsreduzierungsprozess umfasst, wobei der Annäherungsleistungserhöhungsprozess zum Erhöhen der Leistung der Leistungsquelle (11) in dem Beschleunigungsbereich dient, um die Annäherung des ersten Übertragungsbauglieds (D1) zu dem zweiten Übertragungsbauglied (D2) in dem Nichtübertragungszustand zu beschleunigen, wobei der Leistungsreduzierungsprozess zum Reduzieren der Leistung der Leistungsquelle (11) dient, um das Übertragungsdrehmoment, das zwischen dem ersten Übertragungsbauglied (D1) und dem zweiten Übertragungsbauglied (D2) übertragen wird, nach dem Annäherungsleistungserhöhungsprozess zu reduzieren, wobei
der Leistungsänderung-bei-Verlangsamung-Prozess einen Annäherungsleistungsreduzierungsprozess und einen Leistungserhöhungsprozess umfasst, wobei der Annäherungsleistungsreduzierungsprozess zum Reduzieren der Leistung der Leistungsquelle (11) auf den Verlangsamungsbereich dient, um die Annäherung des ersten Übertragungsbauglieds (D1) und des zweiten Übertragungsbauglieds (D2) in dem Nichtübertragungszustand zu beschleunigen, wobei der Leistungserhöhungsprozess zum Erhöhen der Leistung der Leistungsquelle (11) dient, um das Übertragungsdrehmoment, das zwischen dem ersten Übertragungsbauglied (D1) und dem zweiten Übertragungsbauglied (D2) übertragen wird, nach dem Annäherungsleistungserhöhungsprozess zu erhöhen, wobei
die Steuervorrichtung (8) dazu konfiguriert ist, so zu steuern, dass:
in dem Leistungsänderung-bei-Beschleunigung-Prozess der Zeitpunkt zum Starten des Leistungsreduzierungsprozesses nach dem Annäherungsleistungserhöhungsprozess zur selben Zeit wie oder vor einem Umschaltzeitpunkt von dem Nichtübertragungszustand zu dem Beschleunigungsübertragungszustand eingestellt wird und der Zeitpunkt zum Beenden des Leistungsreduzierungsprozesses nach dem Umschaltzeitpunkt eingestellt wird, und
in dem Leistungsänderung-bei-Verlangsamung-Prozess der Zeitpunkt zum Starten des Leistungserhöhungsprozesses nach dem Annäherungsleistungsreduzierungsprozess zur selben Zeit wie oder vor einem Umschaltzeitpunkt von dem Nichtübertragungszustand zu dem Verlangsamungsübertragungszustand gesetzt wird und der Zeitpunkt zum Beenden des Leistungserhöhungsprozesses nach dem Umschaltzeitpunkt gesetzt wird,
wobei die Steuervorrichtung (8) dazu konfiguriert ist, eine Änderungsgröße der Leistung, die durch die Leistungsquelle (11) ausgegeben wird, relativ zu einer Betätigungsgröße der Beschleuniger-Bedieneinrichtung (7b) zu erhöhen, wenn der Annäherungsleistungserhöhungsprozess und/oder der Annäherungsleistungsreduzierungsprozess ausgeführt wird, im Vergleich zu einer Änderungsgröße der Leistung, die ausgegeben wird, wenn weder der Annäherungsleistungserhöhungsprozess noch der Annäherungsleistungsreduzierungsprozess ausgeführt wird.

2. Das Fahrzeug (1) gemäß Anspruch 1,
wobei die Steuervorrichtung (8) dazu konfiguriert ist, einen Befehlswert einer Leistung, die durch die Leistungsquelle (11) auszugeben ist, auf schrittweise Weise zu ändern, wenn der Annäherungsleistungserhöhungsprozess und/oder der Annäherungsleistungsreduzierungsprozess ausgeführt wird.

3. Das Fahrzeug (1) gemäß einem der Ansprüche 1 und 2, das ferner Folgendes aufweist:
einen Drehmomentdetektor (19), der dazu konfiguriert ist, eine Drehmoment-bezogene Größe in Bezug auf das Übertragungsdrehmoment zu detektieren, wobei
die Steuervorrichtung (8) dazu konfiguriert ist, zumindest einen der folgenden zwei Prozesse auszuführen:
der eine Prozess dient zum Steuern einer Größe zum Reduzieren des Übertragungsdrehmoments in dem Leistungsreduzierungsprozess und/oder eines Zeitpunkts zum Starten des zumindest einen Prozesses auf der Basis der Drehmoment-bezogenen Größe, die detektiert wird durch den Drehmomentdetektor (19) in dem Leistungsreduzierungsprozess, der andere Prozess dient zum Steuern einer Größe zum Erhöhen des Übertragungsdrehmoments in dem Leistungserhöhungsprozess und/oder eines Zeitpunkts zum Starten des zumindest einen Prozesses auf der Basis der Drehmoment-bezogenen Größe, die detektiert wird durch den Drehmomentdetektor (19) in dem Leistungserhöhungsprozess.

4. Das Fahrzeug (1) gemäß Anspruch 3, wobei
die Steuervorrichtung (8) dazu konfiguriert ist, den ersten Zeitrahmen bis zu dem Zeitpunkt der Ineingriffnahme zwischen dem ersten Übertragungsbauglied (D1) und dem zweiten Übertragungsbauglied (D2) in der Umfangsrichtung auf der Basis der Drehmoment-bezogenen Größe, die detektiert wird durch den Drehmomentdetektor (19), zu berechnen und den Zeitpunkt zum Starten des zumindest einen Prozesses auf der Basis des berechneten Zeitrahmens bis zum Zeitpunkt der Ineingriffnahme zu bestimmen.

5. Das Fahrzeug (1) gemäß einem der Ansprüche 1 bis 4, wobei
die Steuervorrichtung (8) dazu konfiguriert ist, einen relativen Drehzwischenraum des ersten Übertragungsbauglieds (D1) und des zweiten Übertragungsbauglieds (D2) zu erhalten, und einen Zeitpunkt zum Starten des zumindest einen Prozesses auf der Basis des relativen Drehzwischenraums zu steuern.

6. Das Fahrzeug (1) gemäß Anspruch 5, wobei das Fahrzeug (1) folgende Merkmale aufweist:
eine Drehzahldetektionseinheit (27), die dazu konfiguriert ist, Informationen in Bezug auf die Drehzahl lediglich einer Leistungseingangswelle (20) oder der Leistungseingangswelle (20) und einer Leistungsausgangswelle (30) zu detektieren, wobei die Leistungseingangswelle (20) die Leistungsausgangswelle (30) sich auf das erste Übertragungsbauglied (D1) und das zweite Übertragungsbauglied (D2) beziehen, wobei
die Steuervorrichtung (8) dazu konfiguriert ist, den relativen Drehzwischenraum durch Berechnung des relativen Drehzwischenraums auf der Basis der Informationen der Drehzahl der Leistungseingangswelle (20) zu erhalten.

7. Das Fahrzeug (1) gemäß einem der Ansprüche 1 bis 6, das folgende Merkmale aufweist:
ein Stufengetriebe (13), wobei das Stufengetriebe (13) Folgendes umfasst:
eine radial angeordnete Eingangswelle (20), in die Leistung eingeht;
eine drehbar auf einer Achse parallel zu der Eingangswelle (20) angeordnete Ausgangswelle (30);
eine Mehrzahl von Antriebsrädern (21 - 26), die auf der Eingangswelle (20) bereitgestellt sind und dazu konfiguriert sind, sich gemeinsam mit der Eingangswelle (20) fortlaufend zu drehen oder relativ in Bezug auf die Eingangswelle (20) drehbar zu sein, wobei jede derselben einer Schaltstufe entspricht;
eine Mehrzahl von angetriebenen Rädern (31 - 36), die auf der Ausgangswelle (30) bereitgestellt sind und dazu konfiguriert sind, sich fortlaufend zusammen mit der Ausgangswelle (30) zu drehen oder relativ in Bezug auf die Ausgangswelle (30) drehbar zu sein, und dazu konfiguriert sind, mit einem entsprechenden Antriebsgetrieberad (21 - 26) in Eingriff treten zu können, wobei zumindest eines der Mehrzahl von angetriebenen Rädern (31 - 36) fortlaufend mit dem Antriebsrad (21 - 26) in Eingriff steht; und,
einen Schaltstufeneinstellmechanismus (139) der dazu konfiguriert ist, die Leistungsübertragung mechanisch und selektiv dahingehend einzustellen, von der Eingangswelle (20) zu der Ausgangswelle (30) über das Antriebsrad (21 - 26) und das angetriebene Rad (31 - 36) in Bezug auf eine der Schaltstufen wirksam zu sein, wobei
der Schaltstufeneinstellmechanismus (139) einen Mechanismus (138) zur Klauenineingriffnahme mit Spiel umfasst, wobei der Mechanismus (138) eine erste Klaue (D1), die als das erste Übertragungsbauglied (D1) dient, das bereitgestellt ist in dem Antriebsgetrieberad (21 - 26) oder dem angetriebenen Getrieberad (31 - 36), und eine zweite Klaue (D2) umfasst, die als das zweite Übertragungsbauglied (D2) dient, das in Kontakt mit der ersten Klaue (D1) mit dem Spiel in der Umfangsrichtung in der jeweiligen Schaltstufe tritt, wobei die Klauenineingriffnahme, die als Folge der Klauenineingriffnahme, bei der die erste Klaue (D1) in Kontakt mit der zweiten Klaue (D2) in der Umfangsrichtung tritt, hergestellt wird, eine Leistung, die an das Antriebsrad (21 - 26) über die Eingangswelle (20) übertragen wird, oder eine Leistung, die von dem angetriebenen Rad (31 - 36) an die Ausgangswelle (30) übertragen wird, als wirksam auswählt, wobei
die Leistungsquelle (11) eine Leistung zum Bereitstellen an die Eingangswelle (20) des Stufengetriebes (13) ausgibt.

## Revendications

1. Véhicule (1) comprenant:
un élément d'entraînement (5) configuré pour entraîner le véhicule (1);
une source d'alimentation de courant électrique (11) configurée pour fonctionner dans une région comportant une région d'accélération dans laquelle la source d'alimentation de courant électrique (11) sort de l'énergie vers l'élément d'entraînement (5), et une région de décélération dans laquelle la source d'alimentation de courant électrique (11) est alimentée par l'élément d'entraînement (5);
un premier élément de transmission (D1) et un deuxième élément de transmission (D2) qui sont prévus sur un trajet de transmission de courant électrique de la source de courant électrique (11) à l'élément d'entraînement (5) de manière à présenter un jeu entre eux et à pouvoir tourner relativement l'un par rapport à l'autre, et qui sont configurés pour la transmission de courant électrique en étant en prise l'un avec l'autre;
un actionneur d'accélérateur (7b) configuré pour être actionné par le conducteur du véhicule (1) pour demander une sortie de courant électrique à la source de courant électrique (11); et
un dispositif de commande (8) configuré pour effectuer au moins l'un parmi un processus de changement de puissance en accélération et un processus de changement de puissance en décélération, le processus de changement de puissance en accélération étant destiné à changer la puissance de la source de courant électrique (11) lorsqu'un état de non-transmission est commuté à un état de transmission d'accélération, le processus de changement de puissance en décélération étant destiné à changer la puissance de la source de courant électrique (11) lorsque l'état de non-transmission est commuté à un état de transmission de décélération, l'état de non-transmission étant présent lorsque le premier élément de transmission (D1) s'éloigne du deuxième élément de transmission (D2) dans la direction circonférentielle et que le courant électrique n'est pas transmis, l'état de transmission d'accélération étant présent lorsque le courant électrique est transmis dans la direction d'accélération par venue en prise où le deuxième élément de transmission (D2) entre en contact avec le premier élément de transmission (D1) dans la direction circonférentielle, l'état de transmission de décélération étant présent lorsque le courant électrique est transmis dans la direction de décélération par la venue en prise,
dans lequel
le processus de changement de puissance en accélération comporte un processus d'augmentation de puissance d'approche et un processus de réduction de puissance, le processus d'augmentation de puissance d'approche étant destiné à augmenter la puissance de la source d'alimentation de courant électrique (11) dans la région d'accélération de manière à accélérer l'approche du premier élément de transmission (D1) au deuxième élément de transmission (D2) à l'état de non-transmission, le processus de réduction de puissance étant destiné à réduire la puissance de la source d'alimentation de courant électrique (11) de manière à réduire le couple de transmission transmis entre le premier élément de transmission (D1) et le deuxième élément de transmission (D2) après le processus d'augmentation de puissance d'approche,
dans lequel
le processus de changement de puissance en décélération comporte un processus de réduction de puissance d'approche et un processus d'augmentation de puissance, le processus de réduction de puissance d'approche étant destiné à réduire la puissance de la source d'alimentation de courant électrique (11) vers la région de décélération de manière à accélérer l'approche du premier élément de transmission (D1) et du deuxième élément de transmission (D2) à l'état de non-transmission, le processus d'augmentation de puissance étant destiné à augmenter la puissance de la source d'alimentation de courant électrique (11) de manière à augmenter le couple de transmission transmis entre le premier élément de transmission (D1) et le deuxième élément de transmission (D2) après le processus d'augmentation de puissance d'approche,
dans lequel
le dispositif de commande (8) est configuré pour commander de sorte que:
lors du processus de changement de puissance en accélération, le moment pour commencer le processus de réduction de puissance après le processus d'augmentation de puissance d'approche soit établi à un même moment que, ou avant, un moment de commutation de l'état de non-transmission à l'état de transmission d'accélération, et que le moment pour terminer le processus de réduction de puissance soit établi après le moment de commutation, et
lors du processus de changement de puissance en décélération, le moment pour commencer le processus d'augmentation de puissance après le processus de réduction de puissance d'approche soit établi à un même moment que, ou avant, un moment de commutation de l'état de non-transmission à l'état de transmission de décélération, et que le moment pour terminer le processus d'augmentation de puissance soit réglé après le moment de commutation,
dans lequel le dispositif de commande (8) est configuré pour augmenter une quantité de changement du courant électrique délivré par la source de courant électrique (11) par rapport à une quantité d'actionnement par l'opérateur d'accélérateur (7b) lorsqu'est effectué au moins l'un parmi le processus d'augmentation de puissance d'approche et le processus de réduction de puissance d'approche, en comparaison avec une quantité de changement du courant électrique délivré lorsque n'est effectué ni le processus d'augmentation de puissance d'approche ni le processus de réduction de puissance d'approche.

2. Véhicule (1) selon la revendication 1,
dans lequel le dispositif de commande (8) est configuré pour modifier une valeur de commande du courant électrique devant être délivré par la source de courant électrique (11) de manière par étapes lorsqu'est effectué au moins l'un parmi le processus d'augmentation de puissance d'approche et le processus de réduction de puissance d'approche.

3. Véhicule (1) selon l'une quelconque des revendications 1 et 2, comprenant par ailleurs
un détecteur de couple (19) configuré pour détecter une quantité relative au couple qui est relative au couple de transmission,
dans lequel
le dispositif de commande (8) est configuré pour effectuer au moins l'un parmi les deux processus suivants: l'un processus étant destiné à commander au moins l'un parmi une quantité pour réduire le couple de transmission dans le processus de réduction de puissance et un moment pour commencer l'au moins un processus sur base de la quantité relative au couple détectée par le détecteur de couple (19) dans le processus de réduction de puissance, l'autre processus étant destiné à commander au moins une quantité pour augmenter le couple de transmission dans le processus d'augmentation de puissance et un moment pour commencer l'au moins un processus sur base de la quantité relative au couple détectée par le détecteur de couple (19) dans le processus d'augmentation de puissance.

4. Véhicule (1) selon la revendication 3, dans lequel
le dispositif de commande (8) est configuré pour calculer le laps de temps jusqu'au moment de la venue en prise entre le premier élément de transmission (D1) et le deuxième élément de transmission (D2) dans la direction circonférentielle sur base de la quantité relative au couple détectée par le détecteur de couple (19), et pour déterminer le moment pour commencer l'au moins un processus sur base du laps de temps calculé jusqu'au moment de la venue en prise.

5. Véhicule (1) selon l'une quelconque des revendications 1 à 4, dans lequel
le dispositif de commande (8) est configuré pour obtenir un écart de rotation relatif du premier élément de transmission (D1) et du deuxième élément de transmission (D2), et pour commander un moment pour commencer l'au moins un processus sur base de l'écart de rotation relatif.

6. Véhicule (1) selon la revendication 5, le véhicule (1) comprenant:
une unité de détection de vitesse de rotation (27) configurée pour détecter les informations relatives à la vitesse de rotation soit uniquement d'un arbre d'entrée de courant électrique (20), soit tant de l'arbre d'entrée de courant électrique (20) que d'un arbre de sortie de courant électrique (30), l'arbre d'entrée de courant électrique (20) et l'arbre de sortie de courant électrique (30) se rapportant au premier élément de transmission (D1) et au deuxième élément de transmission (D2),
dans lequel
le dispositif de commande (8) est configuré pour obtenir l'écart de rotation relatif par calcul de l'écart de rotation relatif sur base des informations sur la vitesse de rotation de l'arbre d'entrée de courant électrique (20).

7. Véhicule (1) selon l'une quelconque des revendications 1 à 6, comprenant
une transmission étagée (13), la transmission étagée (13) comprenant:
un arbre d'entrée (20) disposé de manière rotative dans lequel est entré le courant électrique;
un arbre de sortie (30) disposé de manière rotative sur un axe parallèle à l'arbre d'entrée (20);
une pluralité d'engrenages d'entraînement (21 à 26) prévus sur l'arbre d'entrée (20) et configurés pour tourner en continu ensemble avec l'arbre d'entrée (20) ou pour pouvoir tourner de manière relative avec l'arbre d'entrée (20), dont chacun correspond à chaque étape de changement;
une pluralité d'engrenages entraînés (31 à 36) disposés sur l'arbre de sortie (30) et configurés pour tourner en continu ensemble avec l'arbre de sortie (30) ou pour être pouvoir tourner de manière relative avec l'arbre de sortie (30), et configurés pour pouvoir être amenés en prise avec un engrenage d'entraînement correspondant (21 à 26), où au moins l'un de la pluralité d'engrenages entraînés (31 à 36) est en continu en prise avec l'engrenage d'entraînement (21 à 26); et
un mécanisme de réglage d'étage de changement de vitesse (139) configuré pour régler de manière mécanique et sélective la transmission de courant électrique de sorte qu'elle soit efficace de l'arbre d'entrée (20) à l'arbre de sortie (30) par l'intermédiaire de l'engrenage d'entraînement (21 à 26) et de l'engrenage entraîné (31 à 36) relatif à l'un quelconque des étages de changement de vitesse,
dans lequel
le mécanisme de réglage d'étage de changement de vitesse (139) comporte un mécanisme (138) pour venue en prise de crabot avec jeu, le mécanisme (138) comportant un premier crabot (D1) servant de premier élément de transmission (D1) prévu dans soit l'engrenage d'entraînement (21 à 26), soit l'engrenage entraîné (31 à 36), et un deuxième crabot (D2) servant de deuxième élément de transmission (D2) qui entre en contact avec le premier crabot (D1) avec le jeu dans la direction circonférentielle à chaque étage de changement de vitesse, la venue en prise de crabot étant établie comme résultat de la venue en prise de crabots dans laquelle le premier crabot (D1) entre en contact avec le deuxième crabot (D2) dans la direction circonférentielle en sélectionnant, comme étant efficace, la puissance transmise à l'engrenage d'entraînement (21 à 26) par l'intermédiaire de l'arbre d'entrée (20) ou la puissance transmise de l'engrenage entraîné (31 à 36) à l'arbre de sortie (30),
dans lequel
la source de courant électrique (11) délivre le courant électrique à alimenter vers l'arbre d'entrée (20) de la transmission étagée (13).
